(19) Europäisches Patentamt
European Patent Office
Office européen des brevets

(11) EP 2 947 103 A1

(12) **EUROPEAN PATENT APPLICATION**
published in accordance with Art. 153(4) EPC

(43) Date of publication:
**25.11.2015 Bulletin 2015/48**

(21) Application number: **14740905.6**

(22) Date of filing: **20.01.2014**

(51) Int Cl.:
***C08F 216/06*** *(2006.01)* ***C08F 8/12*** *(2006.01)*
***C09J 129/04*** *(2006.01)*

(86) International application number:
**PCT/JP2014/050982**

(87) International publication number:
**WO 2014/112625 (24.07.2014 Gazette 2014/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.01.2013 JP 2013008401**

(71) Applicant: **The Nippon Synthetic Chemical Industry Co., Ltd.**
**Osaka-shi, Osaka 530-0018 (JP)**

(72) Inventors:
- **SHIBUTANI Mitsuo**
  **Osaka-shi**
  **Osaka 530-0018 (JP)**
- **INAKUMA Akinobu**
  **Osaka-shi**
  **Osaka 530-0018 (JP)**
- **KUWADA Misa**
  **Osaka-shi**
  **Osaka 530-0018 (JP)**

(74) Representative: **Kuhnen & Wacker**
**Patent- und Rechtsanwaltsbüro**
**Prinz-Ludwig-Straße 40A**
**85354 Freising (DE)**

(54) **SILYL GROUP-CONTAINING POLY(VINYL ALCOHOL)-BASED RESIN AND USE THEREOF**

(57) An object of the present invention is to provide a novel silyl group-containing PVA-based resin having excellent adhesiveness to inorganic adherend such as glass, and a short defoam time, and to provide a use of the PVA-based resin. The novel silyl group-containing polyvinyl alcohol-based resin contains a vinyl alcohol unit, 1,2-diol unit in a side chain, and a silyl group-containing unit. An aqueous solution of the silyl group-containing polyvinyl alcohol-based resin is useful for an adhesive because of its excellent defoaming property and superior adhesiveness to inorganic adherend such as glass.

Fig. 3

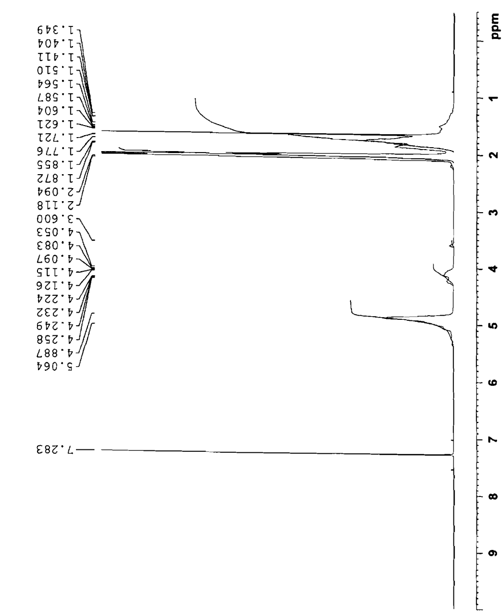

EP 2 947 103 A1

## Description

## TECHNICAL FIELD

The present invention relates to a novel polyvinyl alcohol-based resin containing a silyl group and use thereof, in particular, relates to a polyvinyl alcohol-based resin containing both silyl group and 1,2-diol unit in a side chain of the polyvinyl alcohol and having improved coating and/or adhering efficiency, as well as applications including adhesive and coating solution using the polyvinyl alcohol-based resin.

## BACKGROUND ART

Various modified polyvinyl alcohols modified depending on use are suggested for promoting use of polyvinyl alcohol (hereinafter, occasionally abbreviated as "PVA"). A silyl group-containing PVA is known as a modified PVA excellent in water resistance and adhesiveness to an inorganic substance as disclosed in, for example, JP S58-164604A (patent document 1).

The patent document 1 discloses that a silyl group-containing PVA obtained by copolymerizing an olefinic unsaturated monomer having silicon and a vinyl ester monomer under maintaining a determined concentration ratio between the two monomers through the copolymerization period has an excellent water resistance or adhesiveness to an inorganic substance.

The patent document 1 particularly discloses in Table 1 that alkaline aqueous solution of the silyl group-containing PVA exhibited more excellent water-resistant adhesiveness to an asbestos slate board or mortar board comparing with a silyl group-containing PVA produced by a batch type copolymerization process of an olefinic unsaturated monomer having silicon and a vinyl ester monomer.

On the other hand, JP2008-45078A (patent document 2) suggests an adhesive utilizing a PVA modified by introducing 1,2-diol unit to a side chain of PVA polymer main chain, (the modified PVA is occasionally called as "side chain 1,2-diol-containing PVA"). The adhesive has more excellent adhesiveness to glass board than an unmodified PVA resin, and can provide a bonded article having adhesive layer soluble and removable by immersing the bonded article in hot water. The patent document 2 explains that the adhesive can be recycled owing to its soluble and removable property. The patent document 2 showed a film adhesive comprising side chain 1,2-diol-containing PVA-based resin in Example. This film adhesive can exhibit adhesiveness merely by wetting the surface of the film adhesive with slight amount of water and making the film adhesive swelled, following by drying. The film adhesive can exhibit with decreasing moisture content therein.

Liquid adhesive is required to have excellent coating property and rapidly eliminating bubbles or foams generated during coating the liquid adhesive on a substrate from the viewpoint of coating efficiency. This is because adhesive containing bubbles or foams results in inferior appearance of the resultant adhesive layer as well as decreased adhesive strength due to the bubbles or foams.

Additionally, production of a bonded article comprising inorganic adherend such as metal sheet or glass board includes a step for bonding a first adherend to a second adherend with use of adhesive solution. The bonding step is required to bind a second adherend to a first one soon after applying the adhesive solution on the first one for improving productivity.

Accordingly, it is important to shorten the period for eliminating bubbles in manufacturing a bonded article. A short defoam time is attained by adding antifoamer or lowering viscosity of the adhesive solution. Bubbles in adhesive solution having a lowered viscosity is readily broken due to their lowered stability. In the case of adding antifoamer, smaller added amount is better, because a general antifoamer causes lowering adhesive strength or inferior appearance including lowering transparency.

In such manufacturing sites, liquid adhesive having a viscosity increased to the extent so as not to impair its coating property is used. However, liquid adhesive having such a high viscosity has a difficulty in shortening defoam time because bubbles in the liquid adhesive or generated during coating process have strengthened surfaces of the bubbles to become resistant to be readily broken.

A binder for producing a coating layer such as ink receptive layer and glossy layer of ink-jet recording medium is a typical use of PVA. For example, JP S61-134290A (patent document 3) suggests a coating layer comprising a modified PVA having silyl group and white pigment such as amorphous silica powder. JP2006-95825A (patent document 4) suggests a coating layer comprising PVA containing 1,2-diol unit in a side chain and inorganic microparticles such as colloidal silica.

PRIOR ART

PATENT DOCUMENTS

[Patent document 1] JP S58-164604A
[Patent document 2] JP2008-45078A
[Patent document 3] JP S61-134290A
[Patent document 4] JP2006-95825A

**SUMMARY OF THE INVENTION**

**TECHNICAL PROBLEM TO BE SOLVED BY THE INVENTION**

As described above, liquid adhesive used for bonding process as part of series production processes needs PVA-based resin having improved applying and bonding efficiency by shortening defoam time without impairing adhesive strength and coating property.

Furthermore, in the case of liquid adhesive used for coating layer of ink-jet recording medium, the coating layer is needed for speed-up of the ink absorption speed thereof for satisfying the recent demand for speeding up of printing speed.

Under these situations, the present invention was achieved. An object of the invention is to provide a novel silyl group-containing PVA-based resin having short defoam time as well as excellent adhesiveness to an inorganic substance, and use of the PVA-based resin including adhesive and coating solution.

MEANS FOR SOLVING THE PROBLEMS

A silyl group-containing polyvinyl alcohol-based resin of the present invention comprises the following structural units (1), (2) and (3).

[formula 1]

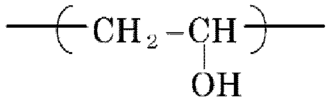

(1)

[formula 2]

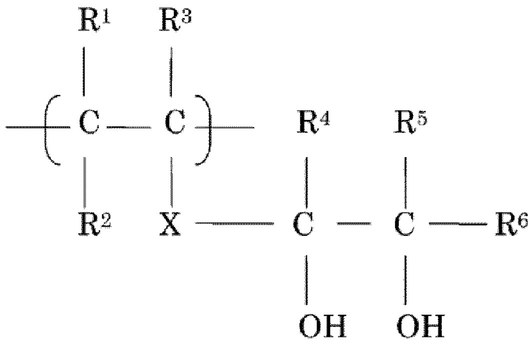

(2)

[formula 3]

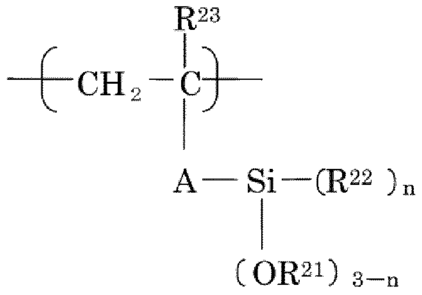

(3)

In the formula (2), $R^1$, $R^2$, $R^3$, $R^4$, $R^5$, and $R^6$ each represents independently hydrogen atom or an organic group, X represents single bond or a binding chain without silicon atom. In the formula (3), A represents single bond or a binding chain, $-OR^{21}$ represents hydroxyl group, alkoxyl group, or acyloxy group, all of them may have a substituting group containing oxygen. $R^{22}$ represents an alkyl group having from 1 to 5 carbon atoms, and $R^{23}$ is hydrogen atom or an alkyl group having from 1 to 5 carbon atoms, and n is an integer from 0 to 2.

In the structural unit represented by the formula (3), n is preferably 0.

Additionally, the content of the structural unit (3) is preferably in the range of 0.01 to 3 mol%, and the content of the 1,2-diol structural unit (2) is preferably in the range of 0.1 to 30 mol%, both based on the silyl group-containing polyvinyl alcohol-based resin.

In another aspect of the present invention, an adhesive and a coating solution which are applications of the novel polyvinyl alcohol-based resin are included. The adhesive of the invention comprises the silyl group-containing polyvinyl alcohol-based resin, and may be a liquid adhesive comprising the polyvinyl alcohol-based resin and an aqueous medium dissolving the polyvinyl alcohol-based resin, or may be a film adhesive.

The above-mentioned coating solution may preferably contain an inorganic filler. A coating solution comprising the silyl group-containing polyvinyl alcohol-based resin, inorganic microparticles, and a dispersion medium is particularly suitable for a coating solution used for ink-jet recording medium.

In further another aspect, the present invention also includes an ink-jet recording medium comprising a coating layer comprising the silyl group-containing polyvinyl alcohol-based resin and inorganic microparticles.

A resin composition comprising the silyl group-containing polyvinyl alcohol-based resin and inorganic filler is also included in the invention.

In further another aspect of the invention, a vinyl ester-based resin which is a silyl group-containing vinyl ester-based resin before saponification of the silyl group-containing polyvinyl alcohol-based resin is also included in the invention.

## EFFECT OF THE INVENTION

The novel polyvinyl alcohol-based resin of the invention can provide a coating solution having superior adhesiveness to an inorganic substance such as glass, and having excellent coating workability by way of suppressing foam generation and shortening defoam time. Also, the inventive polyvinyl alcohol-based resin can provide a coating solution having a higher content of inorganic filler. In addition, use of the polyvinyl alcohol-based resin of the invention gives an ink-jet recording medium excellent in ink absorbency.

## BRIEF DESCRIPTION OF THE DRAWINGS

Fig. 1 shows a diagram indicating a relationship between chemical shift and proton in each unit in the NMR-spectrum obtained by measurement for the content of silyl group-containing unit conducted in Example.
Fig. 2 shows a diagram indicating a relationship between chemical shift and proton in each unit in the NMR-spectrum obtained by measurement for the content of 1,2-diol unit in a side chain conducted in Example.
Fig. 3 is NMR-spectrum (solvent: deuterochloroform) of PVA-based resin 1 synthesized in Example.
Fig. 4 is NMR-spectrum (solvent: deuterium oxide) of PVA-based resin 1 synthesized in Example.
Fig. 5 is NMR-spectrum (solvent: deuterochloroform) of PVA-based resin 2 synthesized in Example.
Fig. 6 is NMR-spectrum (solvent: deuterium oxide) of PVA-based resin 2 synthesized in Example
Fig. 7 is NMR-spectrum (solvent: deuterochloroform) of PVA-based resin 3 synthesized in Example.

Fig. 8 is NMR-spectrum (solvent: deuterium oxide) of PVA-based resin 3 synthesized in Example.
Fig. 9 is NMR-spectrum (solvent: deuterochloroform) of PVA-based resin 4 synthesized in Example.

## MODES FOR CARRYING OUT THE INVENTION

The following description about elements is a mere description of a typical embodiment of the present invention, and the invention is not limited thereto.

A polyvinyl alcohol resin of the invention is characterized by structural units represented by the following formulas (1), (2), and (3).

[formula 1]

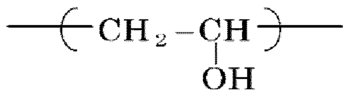

(1)

[formula 2]

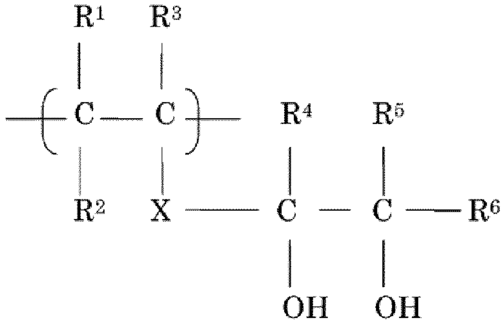

(2)

[formula 3]

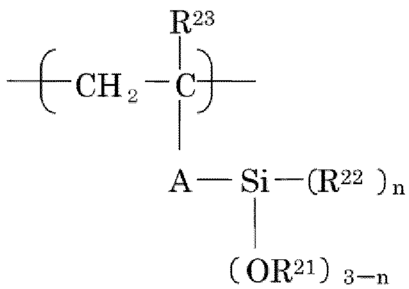

(3)

The formula (1) represents a structural unit derived from a saponified vinyl ester-based monomer, which is contained in a general PVA-based resin. Hereinafter, the structural unit (1) is occasionally called as "vinyl alcohol unit".

Vinyl acetate is typically used for the vinyl ester-based monomer, but not limited thereto. Other vinyl ester-based monomer, for example, aliphatic vinyl ester having from 3 to 20, preferably 4 to 10, particularly preferably 4 to 7 carbon atom, such as vinyl formate, vinyl propionate, vinyl valerate, vinyl butyrate, vinyl isobutyrate, vinyl pivalate, vinyl caprate, vinyl laurate, vinyl stearate, and vinyl versatate; aromatic vinyl ester such as vinyl benzoate; halogen-containing aliphatic vinyl ester such as trifluorovinyl acetate, may be used. These vinyl ester-based monomers may be used alone or in combination with one another according to needs. Vinyl acetate is preferred from the economic viewpoint.

Structural units derived from vinyl ester-based monomers as listed above are saponified to provide the vinyl alcohol unit (1) of the PVA-based resin of the invention. Accordingly, a PVA-based resin of the invention having less than 100 % of saponification degree contains unsaponified structural unit (1a) as shown below.

[formula 1a]

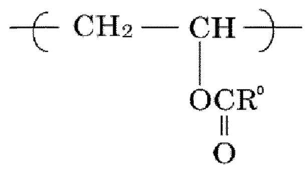 (1a)

In the formula (1a), $R^0COO$- is an acyloxy group derived from the vinyl ester-based monomer, and $R^0$ may contain an unsaturated bond, a halogen atom, and so on, depending on kind of carboxylic acid constituting the vinyl ester-based monomer used. A preferable $R^0CO$- is acetyl group.

The structural unit represented by the formula (2) is characterized by 1,2-diol unit in a side chain. Hereinafter, the structural unit (2) is occasionally called as "1,2-diol unit in a side chain".

In the formula (2), $R^1$, $R^2$, and $R^3$ each represents independently hydrogen atom or an organic group, X represents single bond or a binding chain without silicon atom, and $R^4$, $R^5$, and $R^6$ each represents independently hydrogen atom or an organic group.

Examples of the organic group include saturated hydrocarbon group such as methyl, ethyl, n-propyl, isopropyl, n-butyl, isobutyl, and tert-butyl; aromatic hydrocarbon such as phenyl and benzyl; halogen atom, hydroxyl group, acyloxy group, alkoxycarbonyl group, carboxyl group, sulfonic acid group, and so on.

Preferably, all of $R^1$ thorough $R^3$ and $R^4$ through $R^6$ are independently hydrogen atom or saturated hydrocarbon group having usually 1 to 30 (preferably 1 to 15, more preferably 1 to 4) carbon atoms, and most preferably hydrogen atom. Particular preferably, all of $R^1$ through $R^6$ are hydrogen atoms.

Furthermore, X in the structural unit represented by the formula (2) is preferably single bond because of providing a preferable coating film having a dense molecular structure.

Examples of the binding chain without silicon atom include hydrocarbon such as alkylene, alkenylene, alkynylene, phenylene, and naphthylene, which may be substituted with a halogen such as fluorine, chlorine, or bromine; ether bond-containing group such as -O-, $-(CH_2O)_m-$, $-(OCH_2)_m-$, and $-(CH_2O)_mCH_2-$; carbonyl-containing group such as -CO-, -COCO-, $-CO(CH_2)_mCO-$, and $-CO(C_6H_4)CO-$; sulfur atom-containing group such as -S-, -CS-, -SO-, and $-SO_2-$; nitrogen atom-containing group such as -NR-, -CONR-, -NRCO-, -CSNR-, -NRCS-, and -NRNR-; hetero atom (e.g. phosphorus atom)-containing group such as $-HPO_4-$; Ti-containing group such as $-Ti(OR)_2-$, $-OTi(OR)_2-$, and $-OTi(OR)_2O-$; aluminum atom-containing group such as -Al(OR)-, -OAl(OR)-, and -OAl(OR)O-; and the like metal atom-containing group. In the above binding chains, R is independently a substituting group, and is preferably hydrogen atom or an alkyl group. And m is a natural number and selected from usually 1 to 30, preferably 1 to 15, more preferably 1 to 10. A preferable binding chain without silicon atom is $-CH_2OCH_2-$ and a hydrocarbon chain having from 1 to 10 (preferably 1 to 6) carbon atoms, and a more preferable binding chain is hydrocarbon chain having 1 carbon atom or methylene group, from the viewpoint of stability in production or use thereof.

Accordingly, the most preferable structural unit represented by the formula (2) is a structural unit represented by the formula (2a) shown below, where all of $R^1$ through $R^6$ are hydrogen atoms, and X is single bond.

[formula 2a]

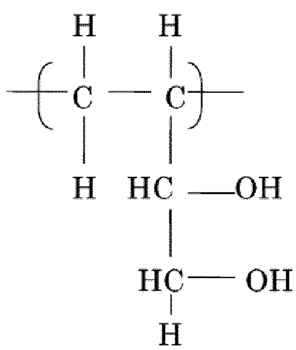 (2a)

The 1,2-diol unit in a side chain can be obtained by saponifying a compound represented by the following formula (I), saponifying and decarboxylating a compound represented by the following formula (II), or saponifying and deketalizating a compound represented by the following formula (III).

[formula 4-1]

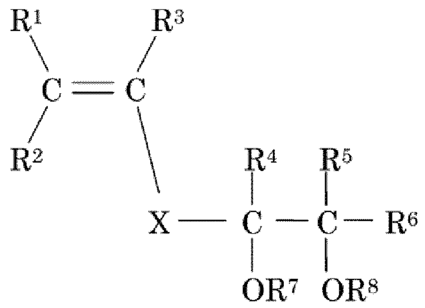

(I)

[formula 4-2]

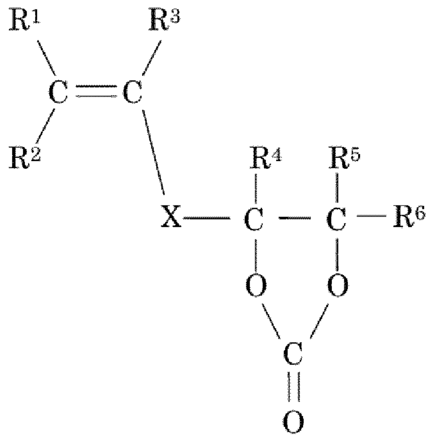

(II)

[formula 4-3]

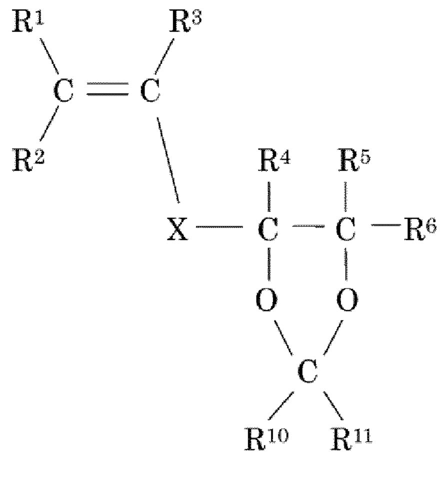

(III)

In the formula (I), (II), and (III), respective $R^1$, $R^2$, $R^3$, X, $R^4$, $R^5$, and $R^6$ are identical to corresponding one in the formula (2). Each of $R^7$ and $R^8$ is independently hydrogen atom or $R^9$-CO-, where $R^9$ is an alkyl group, preferably methyl, ethyl, propyl, butyl, hexyl, or octyl, and the alkyl group may have a substituting group such as halogen, ester group, carboxylic acid group, or sulfonic acid group as far as the substituting group does not infect adversely on reactivity in copolymerization or its subsequent process reaction. Each of $R^{10}$ and $R^{11}$ is independently hydrogen atom or an alkyl group. Preferable examples of the alkyl group for $R^{10}$ or $R^{11}$ include alkyl group having from 1 to 4 carbon atoms such as methyl, ethyl, n-propyl, isopropyl, n-butyl, and tert-butyl, but not limited thereto. These alkyl groups may have a substituting group such as halogen, hydroxyl group, ester group, carboxylic acid group, or sulfonic acid group as far as

the substituting group does not adversely infect on reactivity of copolymerization.

Examples of the compound represented by the formula (I) include 3,4-dihydroxy-1-butene, 3,4-diacyloxy-1-butene, 3-acyloxy-4-hydroxy-1-butene, 4-acyloxy-3-hydroxy-1-butene, and 3,4-diacyloxy-2-methyl-1-butene, which are compounds having single bond for X; 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, and 5,6-diacyloxy-1-hexene, which are compounds having an alkylene group for X; glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, which are compounds having $-CH_2OCH_2-$ or $-OCH_2-$ for X.

3,4-diacyloxy-1-butene, which is a compound where all of $R^1$, $R^2$, $R^3$, $R^4$, $R^5$, and $R^6$ are hydrogen atoms and X is single bond, $R^7$ and $R^8$ each is $R^9$-CO- (where $R^9$ is alkyl group), in particular, 3,4-diacetoxy-1-butene having methyl group for $R^9$, in the point of high copolymerization reactivity and excellent industrial handling property. Respective reactivity ratios of vinyl acetate and 3,4-diacetoxy-1-butene when copolymerizing them are r (vinyl acetate)=0.710 and r(3,4-diacetoxy-1 butene)=0.701, which are larger than those of vinyl acetate and vinyl ethylene carbonate, r(vinyl acetate)=0.85 and r(vinyl ethylene carbonate)=5.4. Therefore, 3,4-diacetoxy-1-butene has a higher reactivity of copolymerizing vinyl acetate.

Vinyl ethylene carbonate, which is a compound represented by the formula (II) having hydrogen atoms for $R^1$, $R^2$, $R^3$, $R^4$, $R^5$, and $R^6$, and having single bond for X, is preferably used because of the ease of availability and higher copolymerization reactivity.

As a compound represented by the formula (III), 2,2-dimethyl-4-vinyl-1,3-dioxolane having hydrogen atoms for $R^1$, $R^2$, $R^3$, $R^4$, $R^5$, and $R^6$, and methyl groups for $R^{10}$ and $R^{11}$, is preferably used because of its ease of availability and higher copolymerization reactivity.

The structural unit (3) corresponds to a silyl group-containing monomer represented by the formula (4) having vinyl group for the organic functional group Y.

Use of such silyl group-containing monomer as a comonomer can provide an inventive PVA-based resin containing silyl group in a side chain. Hereinafter, the structural unit (3) is occasionally referred to as "silyl group-containing unit", and the compound of the formula (4) to be used as a comonomer is occasionally referred to as "silyl group-containing monomer".

[formula 5]

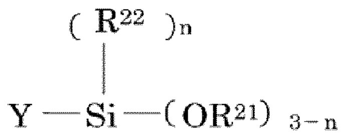

(4)

In the formula (3) or (4), $-OR^{21}$ is hydroxyl group, alkoxyl group, or acyloxy group, and may have a substituting group containing oxygen, and $R^{22}$ is an alkyl group having from 1 to 5 carbon atoms, and $R^{23}$ is hydrogen atom or an alkyl group having from 1 to 5 carbon atoms, and n is an integer selected from 0 to 2.

Examples of the alkyl group having from 1 to 5 carbon atoms includes methyl, ethyl, n-propyl, isopropyl, n-butyl, sec-butyl, tert-butyl, isobutyl, n-pentyl, tert-pentyl, and isopentyl, and preferable example is an alkyl group having from 1 to 3 carbon atoms.

Alkoxyl group for $-OR^{21}$ includes methoxy, ethoxy, propoxy, isopropoxy, butoxy, tert-butoxy, pentoxy, hexyloxy, octyloxy, lauryloxy, oleyloxy, and so on. Alkoxyl group having from 1 to 10 of carbon atoms is preferable, alkoxyl group having from 1 to 5 carbon atoms is more preferable, alkoxyl group having from 1 to 3 carbon atoms is particularly preferable.

Acyloxy group for $-OR^{21}$ includes acetoxy group, propionyloxy, and so on. Acyloxy group having from 1 to 10 carbon atoms is preferable, acyloxy group having from 1 to 5 carbon atoms is more preferable, acyloxy group having from 1 to 3 carbon atoms is particularly preferable.

In the formula (3), A is usually single bond, but may be a binding chain unless the effect of the invention is not inhibited. Examples of the binding chain include hydrocarbon chain such as alkylene having from 1 to 10 carbon atoms and nitrogen atom-containing group such as -CONR- and -NRCO- where R is indpendently a substituting group, preferably hydrogen atom and alkyl group, and m is a natural number of usually 1 to 30, preferably 1 to 15, more preferably 1 to 10. Of these binding chains, a hydrocarbon chain having from 1 to 10 carbon atoms, more preferably a hydrocarbon chain having from 1 to 6 carbon atoms, particularly preferably a hydrocarbon chain having 1 carbon atom.

A preferable unit represented by the formula (3) is a unit where A is single bond and n is 0 or 1, from the viewpoint of the ease of availability. More preferable unit is a unit where n=0 and $OR^{21}$ is an alkoxyl group having from 1 to 5 carbon atoms. Further more preferable unit is a unit where n=0 and $OR^{21}$ is an alkoxyl group having from 1 to 3 carbon atoms.

For introducing the unit (3) into PVA-based resin, for example, silyl group-containing monomer represented by the formula (4) is copolymerized when producing polyvinyl acetate as a precursor of the PVA-based resin. The silyl group-containing monomer has carbon atoms of usually 3 to 30, preferably 3 to 10, more preferably 3 to 8, particularly preferably 3 to 6.

In the formula (4), Y is a vinyl-containing group such as vinyl group, alkenyl group, acryl group, and methacryl group. Isocyanate bond, urethane bond, urea bond, ether bond, ester bond, or alkylene group may be interposed between such a vinyl-containing group and silicon atom.

A compound represented by, for example, the following formula (5) or (6), may be used for the silyl group-containing monomer of the formula (4).

[formula 6]

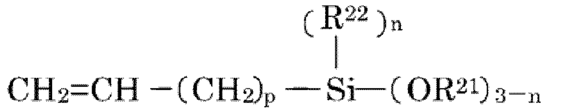
(5)

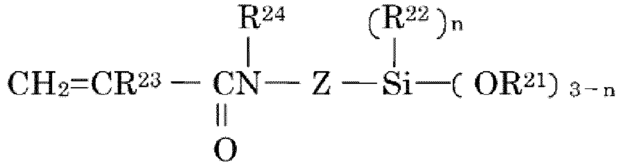
(6)

In the formula (5) and (6), $-OR^{21}$ and $R^{22}$ are identical to those of the formula (4). In the formula (5), p is an integer of 0 to 4.

In the formula (6), $R^{23}$ and $R^{24}$ are independently hydrogen atom, an alkyl group having from 1 to 5 carbon atoms such as methyl, ethyl, n-propyl, isopropyl, n-butyl, sec-butyl, tert-butyl, isobutyl, n-pentyl, tert-pentyl, and isopentyl, Z is an alkylene group having from 1 to 5 carbon atoms or a divalent hydrocarbon group containing oxygen atom or nitrogen atom.

Examples of the alkylene group having from 1 to 5 carbon atoms include methylene, ethylene, dimethyl ethylene, trimethylene, tetramethylene, and pentamethylene. Examples of the divalent hydrocarbon group containing oxygen atom or nitrogen atom include $-CH_2CH_2NHCH_2CH_2CH_2-$, $-CH_2CH_2NHCH_2CH_2-$,$-CH_2CH_2NHCH_2-$, $-CH_2CH_2N(CH_3)CH_2CH_2-$, $-CH_2CH_2N(CH_3)CH_2-$,$-CH_2CH_2OCH_2CH_2CH_2-$, $-CH_2CH_2OCH_2CH_2-$, and $-CH_2CH_2OCH_2-$.

The silyl group-containing monomer represented by the above formula (5) includes, for example, vinyl trimethoxysilane, vinyl methyl dimethoxysilane, vinyl dimethyl methoxysilane, vinyl triethoxysilane, vinyl methyl diethoxysilane, vinyl dimethyl ethoxysilane, allyl trimethoxysilane, allyl methyl dimethoxysilane, allyl dimethyl methoxysilane, allyl triethoxysilane, allyl methyl diethoxysilane, allyl dimethyl ethoxysilane, vinyl tris(β-methoxyethoxy)sllane, vinyl isobutyl dimethoxysilane, vinyl ethyl dimethoxysilane, vinyl methoxy dibutoxysilane, vinyl dimethoxy butoxysilane, vinyl tributoxysilane, vinyl methoxy dihexyloxysilane, vinyl dimethoxy hexyloxysilane, vinyl trihexyloxysilane, vinyl methoxy dioctyloxysilane, vinyl dimethoxy octyloxysilane, vinyl trioctyloxysilane, vinyl methoxy dilauryloxysilane, vinyl dimethoxy lauryoxysilane, vinyl methoxy dioleyloxysilane, vinyl dimethoxy oleyloxysilane.

In the formula (5), n is preferably 0 or 1, from the viewpoint of reactivity between vinyl ester-based monomer and a monomer providing 1,2-diol unit in a side chain. Vinyl trialkoxysilane having n=0 and alkoxyl group having from 1 to 5 carbon atoms for $-OR^{21}$ is more preferable, and vinyl trialkoxysilane having n=0 and alkoxyl group having from 1 to 3 carbon atoms for $-OR^{21}$ is particularly preferable, from the point of availability.

The silyl group-containing monomer represented by the above formula (6) include, for example, 3-(meth)acrylamide-propyl trimethoxysilane, 3-(meth)acrylamide-propyl triethoxysilane, 3-(meth)acrylamide-propyl tri(β-methoxyethoxy)silane, 2-(meth)acrylamide-ethyl trimethoxysilane, 1-(meth)acrylamide-methyl trimethoxysilane, 2-(meth)acrylamide-2-methyl propyl trimethoxysilane, 2-(meth)acrylamide-isopropyl trimethoxysilane, N-(2-(meth)acrylamide-ethyl)-aminopropyl trimethoxysilane, (3-(meth)acrylamide-propyl)-oxypropyl trimethoxysilane, 3-(meth)acrylamide-propyl triacetoxysilane, 2-(meth)acrylamide-ethyl triacetoxysilane, 4-(meth)acrylamide-butyl triacetoxysilane, 3-(meth)acrylamide-propyl tripropionyloxysilane, 2-(meth)acrylamide-2-methylpropyl triacetoxysilane, N-(2-(meth)acrylamide-ethyl)-aminopropyl triacetoxysilane, 3-(meth)acrylamide-propyl isobutyl dimethoxysilane, 2-(meth)acrylamide-ethyl dimethyl methoxysilane, 3-(meth)acrylamide-propyl methyl diacetoxysilane, 2-(meth)acrylamide-2-methyl propylhydrogen dimethoxysilane, 3-(N-methyl-(meth)acrylamide)-propyl trimethoxysilane, and 2-(N-ethyl-(meth) acrylamide)-ethyl triacetoxysilane.

Of these monomers, 3-(meth)acrylamide-propyl trimethoxysilane or 3-(meth)acrylamide-propyl triacetoxysilane

is preferably used because of simple industrial production and easy availability at relatively low price. In addition, 2-(meth)acrylamide-2-methyl propyl trimethoxysilane or 2-(meth)acrylamide-2-methylpropyl triacetoxysilane is preferably used because of remarkably stable amide bond in acid or alkali condition.

In the above formula (6), preferable n is 0 or 1, from the viewpoint of reactivity of the compound (6) with vinyl ester-based monomer or a monomer providing 1,2-diol unit in a side chain. The compound (6) having n=0 in the formula, i.e. vinyltrialkoxy silane, is preferably used, and vinyl trialkoxy silane (n=0) having from 3 to 10 carbon atoms in the formula (6) is more preferable, from the viewpoint of availability.

A preferable silyl group-containing monomer is a monomer in which A is single bond and n is 0 or 1. A monomer represented by the formula (3) having n=0 and alkoxyl group having from 1 to 5 carbon atoms for $-OR^{21}$ is more preferable, and a monomer (3) having n=0 and alkoxyl group having from 1 to 3 carbon atoms is further more preferable.

Accordingly, a preferable silyl group-containing monomer is a monomer represented by the formula (5) having n of 0 or 1. Vinyl trialkoxysilane represented by the formula (5) in which n is 0 and $-OR^{21}$ is alkoxyl group having from 1 to 5 carbon atoms (particularly preferably 1 to 3 carbon atoms) for $-OR^{21}$ is more preferable.

A silyl group-containing PVA-based resin having structural units described above of the invention is usually obtained by copolymerizing vinyl ester-based monomer providing a structural unit (1), a monomer providing a structural unit (2), i.e. monomer represented by the above formula (I), (II), or (III), and silyl group-containing monomer (4) providing a structural unit (3), and saponifying the resulting copolymer.

The copolymers before saponification are vinyl ester-based resins containing a structural units represented by the formulas (1a) and (3), and one of structural units of (Ia), (IIa) and (IIIa) derived from the formula (I), (II) and (III) respectively.

[formula 1a]

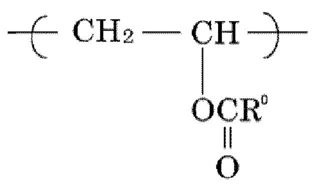

(1a)

[formula 3]

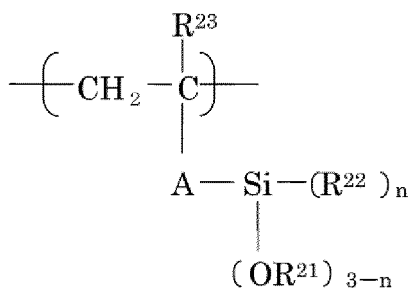

(3)

[formula 7-1]

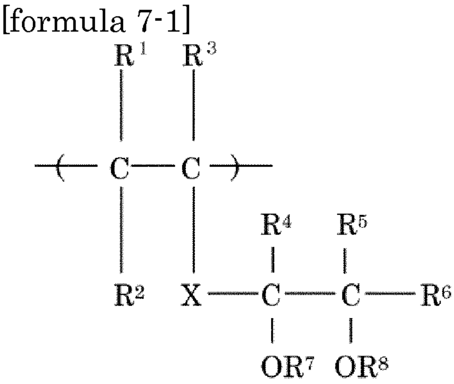

(I a)

[formula 7-2]

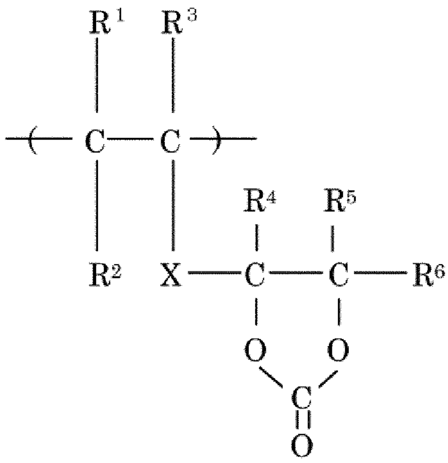

(II a)

[formula 7-3]

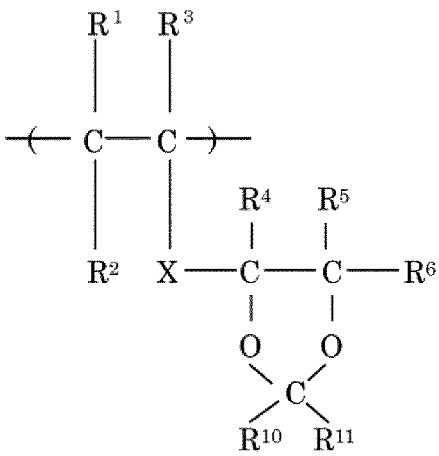

(III a)

$R^0COCO^-$, $R^1$, $R^2$, $R^3$, $R^4$, $R^5$, $R^6$, $R^7$, $R^8$, A, $-OR^{21}$, $R^{22}$, $R^{23}$ and X in these formulas have been already explained.

Such vinyl ester-based resin is saponified to give silyl group-containing PVA-based resin containing structural units (1), (2), and (3).

The silyl group-containing PVA-based resin may further contain a structural unit derived from other comonomer copolymerizable with vinyl ester-based monomer within the range in which physical properties of the resin are not remarkably inhibited.

The content of the other comonomer units in the silyl group-containing PVA-based resin is in the ranges not inhibiting the effect of the invention, usually less than 20 mol%, preferably less than 10 mol%, more preferably less than

3 mol%.

Examples of the comonomer include olefins such as ethylene, propylene, isobuthylene, α-octene, α-dodecene, and α-octadecen; unsaturated acids such as acrylic acid, methacrylic acid, crotonic acid, maleic acid, maleic anhydride, and itaconic acid, and salt, monoester, or dialkyl ester thereof; nitriles such as acrylonitrile and methacrylonitrile; amides such as diacetone acrylamide, acrylamide, and methacrylamide; olefin sulfonic acids such as ethylene sulfonic acid, allyl sulfonic acid, methallyl sulfonic acid, and salt thereof; alkyl vinyl ethers; vinyl compounds such as dimethyl allyl vinyl ketone, N-vinylpyrrolidone, and vinyl chloride; substituted vinyl acetates such as isopropenyl acetate and 1-methoxyvinyl acetate; vinylidene chloride, 1,4-diacetoxy-2-butene, vinylene carbonate, acetoacetyl group-containing monomer, and so on.

In the silyl group-containing PVA-based resin containing the above-mentioned structural units, the content of 1,2-diol unit in a side chain (2) is in the range of usually 0.1 to 30 mol%, preferably 1 to 15 mol%, particularly preferably 3 to 12 mol%. Unduly small content of the 1,2-diol unit in a side chain makes difficult to lower suppression of generating bubbles or to shorten defoam time. In addition, unduly small content of the 1,2-diol unit in a side chain tends to lower its adhesive strength and durability when the silyl group-containing PVA-based resin is used for adhesive or coating solution, because volume contraction occurs readily with crystallization of the PVA-based resin when the adhesive layer is dried.

The content of the 1,2-diol unit in a side chain can be calculated based on the integrated value measured with $^1$H-NMR (300MHz, proton NMR, d6-DMSO solution, and internal standard material; tetramethylsilane, 50 °C). When the content of the silyl group-containing unit (3) is relatively high, it is recommended to employ the integrated value measured with a solution dissolved in deuterium oxide or a solution dissolving a polyvinyl acetate in deuterochloroform solvent prior to saponification because the d6-DMSO solution having a high content of the silyl group-containing unit (3) becomes a gel.

The content of the silyl group-containing unit (3) is in the range of usually 0.01 to 3 mol%, preferably 0.1 to 1.5 mol%, more preferably 0.1 to 0.8 mol%. Unduly low content of the silyl group-containing unit (3) tend to become difficult in not only obtaining the effects of improving wettability of the coating solution to inorganic substances or inorganic fillers used according to needs, but also increasing the adhesive strength.

The content of the silyl group-containing unit is determined with $^1$H-NMR (solvent: deuterochloroform, 23 °C). For example, in the case of vinyl triethoxysilane as the silyl group-containing monomer, the content of the silyl group-containing unit is determined as the content of triethoxysilane.

The content of the silyl group-containing unit (3) is usually from 300 to 20000ppm, preferably from 500 to 15000ppm, as the content of Si determined by ICP emission analysis.

The ratio ((3)/(2)) of the contents of silyl group-containing unit (3) to 1,2-diol unit in a side chain (2) is in the range of preferably 0.0001 to 30, more preferably 0.001 to 10, further more preferably 0.01 to 1, particularly preferably 0.01 to 0.1.

The average polymerization degree determined according to JIS K6726 of the silyl group-containing PVA-based resin of the invention is in the range of usually 100 to 4000, preferably 300 to 3500, particularly preferably 600 to 2000. Unduly low polymerization degree results in the coating film to be readily cracked. Unduly high polymerization degree causes to lower coating workability due to too high viscosity of the liquid adhesive. Dilution of the liquid adhesive can secure the coating workability because of lowered concentration of the liquid adhesive, however, causes to lengthen drying time and hinder the improvement of productivity.

A silyl group-containing PVA-based resin having low polymerization degree may be produced by performing the copolymerization in the presence of thiol compound such as 2-mercaptoethanol, n-dodecylmercaptan, mercaptoacetic acid, and 3-mercaptopropionic acid.

According to the invention, the silyl group-containing PVA-based resin has a saponification degree of usually 85 to 100 mol%, preferably 90 to 100 mol%, particularly 98 to 100 %, which is determined by the titration method based on JIS K6726. The saponification degree used in the specification means a conversion ratio (mol%) of the amount of hydroxyl groups generated by conversion to the total amounts of the portion to be esterified of the vinyl ester-based monomer, and acyloxy group, carbonate group, or acetal group of the comonomer providing the 1,2-diol unit in a side chain.

Unduly low saponification degree of silyl group-containing PVA-based resin means low content of hydroxyl group of the silyl group-containing PVA-based resin, and therefore tends to become difficulty in achieving sufficient adhesive strength to an inorganic substance, and to readily generate bubbles in PVA aqueous solution, which is not preferable.

In the silyl group-containing PVA-based resin consisting of the above-mentioned structural units, the content of the structural unit (1a) is usually less than 15 mol%, preferably from 0 to 10 mol%, particularly preferably from 0 to 2 mol%, because the structural unit (1a) is still a remaining vinyl ester group notwithstanding accomplishing saponification of units derived from vinyl ester-based monomers.

Accordingly, most preferable silyl group-containing PVA-based resin has the following features:

the content of the structural unit (2a) is 3 to 12 mol%;
in the formula (3), n is 0, and $-OR^{21}$ is an alkoxyl group having from 1 to 3 carbon atoms;
the content of the structural unit (3) is 0.1 to 0.8 mol%;
the ratio ((3)/(2)) of the contents of the silyl group-containing unit (3) to 1,2-diol unit in a side chain (2) is in the range of 0.01 to 0.1;
the saponification degree is from 98 to 100 %; and
the polymerization degree is from 700 to 1000.

The aqueous solution of the silyl group-containing PVA-based resin having the above-mentioned features exhibits superior wettability and higher adhesive strength to an inorganic substance such as glass board, metal board, mortar board, and ceramic board, comparing with aqueous solution of unmodified PVA or PVA-based resin containing 1,2-diol unit in a side chain but not containing silyl group. Furthermore, the silyl group-containing PVA-based resin of the invention is resistant to generate bubbles and readily defoam, comparing with a silyl group-modified PVA-based resin without 1,2-diol unit in a side chain.
Moreover, the silyl group-containing PVA-based resin of the invention has more excellent affinity to inorganic fillers than PVA-based resin containing 1,2-diol unit in a side chain but not containing silyl group, or silyl group modified PVA-based resin without 1,2-diol unit in a side chain. Therefore, it is possible to use a great deal of inorganic fillers with the silyl group-containing PVA-based resin.

[Method for producing silyl group-containing PVA]

The silyl group-containing PVA-based resin of the invention may be produced by copolymerizing vinyl ester monomer providing a structural unit (1) or (1a), a monomer (I), (II), or (III) providing a 1,2-diol unit in a side chain (2), and silyl group-containing monomer (4) providing the structural unit (3), and saponifying the obtained vinyl ester-based copolymer. Thus PVA-based resin where silyl group-containing unit is introduced into a side chain of the PVA polymer besides 1,2-diol unit in a side chain is obtained.
Such silyl group-containing PVA, in which a silyl group-containing unit is introduced into the polymer chain of PVA, is excellent in adhesiveness and wettability to inorganic substance or inorganic filler, comparing with a composition merely comprising a silane coupling agent and PVA-based resin containing 1,2-diol unit in a side chain.
A method for producing the PVA-based resin containing 1,2-diol unit (2a) for the 1,2-diol unit in a side chain will be explained below as an example of the method for producing the silyl group-containing PVA-based resin of the invention.

[1] a method comprising copolymerizing vinyl ester-based monomer with a monomer (I) and silyl group-containing monomer, and saponifying the resultant copolymer;
[2] a method comprising copolymerizing vinyl ester-based monomer with a monomer (II) and a silyl group-containing monomer, and saponifying and decarboxylating the resultant copolymer; and
[3] a method comprising copolymerizing a vinyl ester-based monomer with a monomer (III) and a silyl group-containing monomer, and saponifying and deacetalizating the resultant copolymer.

Of these method, the method [1] is preferably employed because the method [1] has advantages in production, melt-molding of the obtained PVA-based resin, and properties of the resultant film. The polymerization process of the method [1] proceeds smoothly, and 1,2-diol structural unit may be evenly and readily introduced into PVA-based resin. Polyvinyl acetate paste is not precipitated in polymerization solvent before saponification even when the modification amount is increased upto 7 or 8 mol% or more. Particularly preferable method is to copolymerize vinyl ester-based monomer with a monomer (I) (in particular, 3,4-diacyloxy-1-butene), and saponify the obtained copolymer, because of superior copolymerization reactivity. Especially, 3,4-diacetoxy-1-butene is preferably used as the 3,4-diacyloxy-1-butene.
It is preferable to put silyl group-containing monomer and a monomer providing 1,2-diol unit in a side chain so that the copolymerization will be performed under fixing the ratio of the contents of these two monomers to the content of vinyl ester-based monomer in the reaction system. Specifically, those two monomers are preferably put not in one batch but in a manner of dropping necessary amount into vinyl ester-based monomer solution, and are copolymerized. Since the reaction between silyl group-containing monomer and vinyl ester-based monomer proceeds more readily than the reaction between a monomer providing 1,2-diol unit in a side chain and vinyl ester-based monomer, putting monomers in one batch has a tendency to precede the introduction of silyl group-containing unit into PVA polymer chain, as a result, the content ratio of monomers in the reaction system become difficult to maintain a constant ratio.
On the other hand, addition by falling-drop method makes it easy to produce a PVA-based resin into which silyl group-containing unit and 1,2-diol unit in a side chain are evenly introduced.
According to the invention, a preferable silyl group-containing PVA-based resin is a PVA-based resin where

silyl group-containing unit and 1,2-diol unit in a side chain are randomly but evenly introduced into the polymer molecular chain thereof. Such silyl group-containing PVA-based resin is superior to PVA-based resin where silyl group-containing unit and/or 1,2-diol unit in a side chain are localized in solubility and viscosity stability of the prepared solution.

Also such silyl group-containing PVA-based resin has more increased amount of hydroxyl groups per polymer molecular chain than unmodified PVA-based resin due to the 1,2-diol unit in a side chain of the silyl group-containing PVA-based resin. Therefore, the silyl group-containing PVA-based resin can exhibit larger cohesive force than unmodified PVA-based resin, and thereby the former can exhibit more improved wettability to an inorganic substance than the latter. This is supposed that the silyl group-containing PVA-based resin might have a large cohesive force close to that of water molecule, or have as high surface tension as water. For these reasons, a coating solution or liquid adhesive comprising the silyl group-containing PVA-based resin is improved in coating property over glass board, metal board, and the like.

The adding amount of the monomer providing 1,2-diol unit in a side chain and silyl group-containing monomer may be determined depending on the introduction amount of these units into the resultant PVA-based resin.

A conventional polymerization method and saponification method known as those for PVA-based resin containing 1,2-diol unit in a side chain may be employed for a novel silyl group-containing PVA-based resin. Specific methods will be described below.

Solvent used for the copolymerization process includes, for example, lower alcohol such as methanol, ethanol, propanol, and butanol; ketones such as acetone and methyl ethyl ketone. Methanol is preferably used in industry. The amount of the solvent may be determined with taking into consideration a desired polymerization degree of the copolymer and chain transfer constant of the solvent. For example, in the case of using methanol for the solvent, the amount of the solvent is chosen so that the weight ratio (S/M) of the solvent to the monomer will be achieved to the range of 0.01 to 10, preferably 0.05 to 7.

A polymerization catalyst used in copolymerization process includes, for example, known radical polymerization catalyst such as azobisisobutyronitrile, acetyl peroxide, benzoyl peroxyde and lauryl peroxyde, as well as low temperature activating radical polymerization catalyst including peroxyesters such as t-butyl peroxyneodecanoate, t-butyl peroxypivalate, $\alpha,\alpha'$-bis(neodecanoylperoxy) diisopropyl benzene, cumyl peroxyneodecanoate, 1,1,3,3,-tetramethyl butyl peroxyneodecanoate, 1-cyclohexyl-1-methyl ethyl peroxyneodecanoate, t-hexyl peroxyneodecanoate, t-hexyl peroxypivalate; peroxydicarbonates such as di-n-propyl peroxydicarbonate, diisopropyl peroxydicarbonate, di-sec-butyl peroxydicarbonate, bis (4-t-butylcyclohexyl)peroxy dicarbonate, di-2-ethoxy ethyl peroxydicarbonate, di(2-ethylhexyl)peroxydicarbonate, dimethoxy butyl peroxydicarbonate, di(3-methyl-3-methoxy butyl peroxy)dicarbonate; diacyl peroxides such as 3,3,5-trimethyl hexanoyl peroxide, diisobutyryl peroxide, lauroyl peroxide. The adding amount of the polymerization catalyst may be appropriately determined according to polymerization speed, and depends on type of the catalyst. For example, adding amount of azobisisobutyronitrile or acetyl peroxide is appropriately determined from the range of 10 to 2000ppm, particularly 50 to 1000ppm, per vinyl ester-based monomer. The temperature in copolymerization process may be chosen from the range of 40 °C to a boiling point of the reaction system, depending on a solvent or pressure in the reaction system.

In addition, a known polymerization inhibitor used for radical polymerization may be preferably added into the reaction system for stopping the polymerization. Examples of the polymerization inhibitor include m-dinitrobenzene, ascorbic acid, benzoquinone, dimer of $\alpha$-methyl styrene, p-methoxy phenol, and sorbic acid.

Thus obtained copolymer is saponified in the solution where the copolymer is dissolved in alcohol or hydrous alcohol with use of alkali or acid catalyst. Methanol, ethanol, propanol, or tert-butanol may be used for the alcohol, in particular, methanol is preferably used. The content of the copolymer in the alcohol solution may be appropriately determined depending on viscosity of the reaction system, usually selected from the range of 10 to 60 wt%. Examples of the catalyst used for the saponification include alkali catalyst such as alkali metal hydroxide or alcoholate including sodium hydroxide, potassium hydroxide, sodium methylate, sodium ethylate, potassium methylate, and lithium methylate; and acid catalyst such as sulfuric acid, hydrochloric acid, nitric acid, methane sulfonic acid, zeolite, and cation exchange resin.

The adding amount of the saponification catalyst may be selected with taking into consideration saponification method, an intended saponification degree, and so on. The adding amount of alkali catalyst is usually selected from the range of 0.001 to 0.1 equivalent, preferably 0.005 to 0.05 equivalent, to the total amount of vinyl ester-based monomer and the monomer such as 3,4-diacyloxy-1-butene. Saponification in batch, continuous saponification executed on belt, or tower type continuous saponification may be employed for the saponification method, depending on an intended saponification degree of the resultant. In general, saponification in batch or continuous saponification executed on belt is employed. Tower type saponification under a fixed pressure may be employed because such tower type saponification can reduce amount of alkali catalyst and can readily and efficiently proceed in short time. The pressure in the saponification process of the tower type saponification may be chosen from the range of 2 to 7 $kg/cm^2$, and the temperature in the saponification process may be chosen from the range of 80 to 150 °C, preferably 100 to 130 °C, but not limited thereto because these conditions depend on the content of other comonomers.

Thus produced saponified product is dried after removing solvent to produce a particulate silyl group-containing

PVA-based resin of the invention.

The viscosity of weak alkali aqueous solution of 4 wt% of the PVA-based resin measured with Hoppler viscometer at 20 °C is in the range of usually 1.85 to 269 mPa·s (100 to 4000), preferably 2.9 to 160 mPa·s (250 to 3400), particularly preferably 6 to 40 mPa·s (600 to 2000). Unduly high viscosity tends to lower workability when dissolving the PVA-based resin. Unduly low viscosity tends to increase the cost for production. Values in parentheses are polymerization degree determined based on JIS K 6726.

The viscosity of the aqueous solution of silyl group-containing polyvinyl alcohol-based resin tends to be increased due to the silyl group, comparing with that of a polyvinyl alcohol-based resin without silyl group, however, gelation rate or viscosity behavior of the aqueous solution of the silyl group-containing polyvinyl alcohol-based resin may be controlled by adjusting pH of the aqueous solution.

[Resin composition]

A resin composition of the present invention comprises a silyl group-containing PVA-based resin and an inorganic filler.

The inorganic filler is not limited and a generally known one may be used for the filler. The form or shape of the inorganic filler is not limited, and any shapes including particulate, fibrous, irregular shape, or hollow may be employed. Examples of the inorganic filler include talc, clay, silicon dioxide, diatomite, kaolin, mica, asbestos, gypsum, graphite, glass balloon, glass bead, calcium sulfate, barium sulfate, ammonium sulfate, calcium sulfite, calcium carbonate, whisker type calcium carbonate, magnesium carbonate, dawsonite, dolomite, potassium titanate, carbon black, glass fiber, alumina fiber, boron fiber, processed mineral fiber, carbon fiber, carbon hollow particle, bentonite, montmorillonite, copper powder, sodium sulfate, potassium sulfate, zinc sulfate, copper sulfate, iron sulfate, magnesium sulfate, aluminum sulfate, aluminum potassium sulfate, nitric acid ammonium, sodium nitrate, potassium nitrate, aluminum nitrate, ammonium chloride, sodium chloride, potassium chloride, magnesium chloride, calcium chloride, sodium phosphate, potassium chromate, and calcium citrate.

The content ratio (A/B) of the silyl group-containing PVA-based resin (A) to the inorganic filler (B) in the resin composition is in the range of usually 10/90 to 99/1, preferably 20/80 to 80/20, further preferably 30/70 to 60/40, particularly preferably 30/70 to 50/50, based on weight. Since the silyl group-containing PVA-based resin has high affinity to the inorganic filler as described above, an inorganic filler may be dispersed in the resin composition having a content ratio (A/B) as low as 50/50 or less, which means a resin composition containing inorganic filler in high content.

The method of mixing silyl group-containing PVA-based resin with inorganic filler is not limited, but include i) method of dissolving silyl group-containing PVA-based resin in good solvent, and adding inorganic filler to the obtained solution; ii) method of dissolving or dispersing silyl group-containing PVA-based resin and inorganic filler respectively in liquid solvent, and mixing the obtained solutions or suspensions. The obtained liquid resin composition may be used directly as coating solution. The obtained liquid resin composition may be precipitated in poor solvent and dried to obtain a resin composition in the form of particle or powder. Alternatively, the obtained liquid resin composition may be cast on a substrate and dried to obtain a film of the resin composition. And besides, the resin composition may be obtained in the form of emulsion, cream, or the like forms.

[Use of silyl group-containing PVA-based resin]

The silyl group-containing PVA-based resin of the invention is excellent in adhesiveness to an inorganic substance and can provide its aqueous solution having suppressed generation of bubbles and short defoam time, as described above. In addition, the silyl group-containing PVA-based resin has improved affinity to inorganic filler. Based on these features of the silyl group-containing PVA-based resin, the silyl group-containing PVA-based resin can provide a coating layer exhibiting excellent gloss without crazing even when the content of the inorganic filler is relatively high, comparing with a PVA-based resin containing 1,2-diol unit in a side chain but not containing silyl group-containing unit, and a PVA-based resin containing silyl group-containing unit but not containing 1,2-diol unit in a side chain. Accordingly, the silyl group-containing PVA-based resin or a resin composition using the same is preferably used for adhesive, various coating solution, dispersing agent for emulsion, and so on.

[Adhesive]

The form of adhesive using the silyl group-containing PVA-based resin of the invention is not limited, and include liquid adhesive where silyl group-containing PVA-based resin is dissolved in a solvent, and film adhesive obtainable by casting solution of silyl group-containing PVA-based resin and drying, or by melt extruding silyl group-containing PVA-based resin, or a like method. These embodiments will be described below.

(1) Liquid adhesive

As a solvent used for the liquid adhesive, an aqueous medium such as water, or mixture of water and alcohol, preferably water, may be used in the point of operational safety and handling properties. Examples of the alcohol include primary alcohols such as methyl alcohol, ethyl alcohol, n-propyl alcohol, isopropyl alcohol, and butyl alcohol; and polyalcohols such as ethylene glycol, propylene glycol, glycerin, and so on.

Besides, phenols such as phenol and cresol; amines such as ethylenediamine and trimethylene diamine; dimethylsulfoxide, dimethylacetamide, N-methylpyrrolidone, and the like solvents may be used alone or in combination as the solvent for the liquid adhesive. In the case that the aqueous medium contains alcohol, the content ratio of the alcohol to water is usually 50 wt% or less, preferably 30 wt% or less, particularly preferably 20 wt% or less.

A preferable liquid adhesive of the invention is neutral or alkaline in the point of stability of 1,2-diol unit in a side chain and silyl group-containing unit. Accordingly, if necessary, alkaline metal salt or alkaline earth metal salt may be added.

Additionally, another additives including antifoamer, corrosion inhibitor, antimold agent, preserving agent, and leveling agent may be contained in the liquid adhesive for the purpose of improving stability of the liquid adhesive when preserved in the form of aqueous solution and workability when using the liquid adhesive.

A method for preparing the liquid adhesive is not limited, and include a method of preparing a PVA-based resin aqueous solution and adding a necessary additives to the aqueous solution, a method of blending additives with PVA-based resin and then dissolving the resultant mixture in a solvent, and the like method.

The content of the silyl group-containing PVA-based resin in liquid adhesive is in the range of usually 3 to 50 wt%, preferably 5 to 30 wt%, particularly 7 to 25 wt%. An liquid adhesive having too low content of the silyl group-containing PVA-based resin requires a coated amount to be more increased for obtaining sufficient adhesive strength, which occasionally results in extending the drying time due to excess water contained therein, resulting in bloom of excess water to the surface of substrate to be bonded therewith, or resulting in inferior coating property due to unduly low viscosity of the liquid adhesive. A liquid adhesive having too high content of the silyl group-containing PVA-based resin tends to spoil the handling property or coating property due to unduly high viscosity of the liquid adhesive.

The liquid adhesive may be applied evenly on a substrate (i.e. a first substrate) with use of bar coater, applicator, air knife coater, or curtain coater, or sprayed, in the same manner as applying a general liquid adhesive. The coated amount based on drying weight of the liquid adhesive is in the range of usually 20 to 2500g/$m^2$, preferably 30 to 2300g/$m^2$, particularly 50 to 2000g/$m^2$. Insufficient coated amount of the adhesive causes to decrease adhesive strength. On the contrary, excess coated amount of the adhesive does not contribute to the improvement of the adhesive strength, what is even worse, the excess liquid adhesive tends to give inferior appearance of the resulting bonded article because of protruding outside of the bonded article.

The defoamed and semidry coating layer of the liquid adhesive, which is tacky due to remaining solvent in the layer, is laminated with another adherend, and thereafter dried by heating, or absorption of solvent by the adherends. Such bonding operation with the liquid adhesive may be consecutively performed because the liquid adhesive has short defoam time. Accordingly, a continuous production of bonded articles including bonding process can be employed, and the productivity of the bonded articles can be improved.

Furthermore, the liquid adhesive of the invention may contain a variety of inorganic fillers according to needs because the silyl group-containing PVA-based resin tends to possess film-forming property even when relatively increased amount of inorganic fillers is added. Accordingly, it is easy to give desirable properties to the liquid adhesive of the invention.

(2) Film adhesive

A method for producing film type adhesive of the invention is not limited, and include, for example, solution casting to produce film and melt extrusion to produce film.

The method for producing film by solution casting is a method of casting aqueous solution containing the silyl group-containing PVA-based resin on a substrate such as metal roll and heat drying to obtain a film. In this method, the concentration or casting amount of the aqueous solution may be determined according to an intended thickness of the resultant film adhesive.

For the purpose of improving film productivity, various organic solvent or additive listed as an additive for aqueous liquid adhesive mentioned above may be blended. Additionally, a known antiblocking agent may be contained for avoiding blocking when rewinding the resulting film.

Since the silyl group-containing PVA-based resin of the invention, which contains silyl group-containing unit and 1,2-diol unit in a side chain may allow to use more increased amount of inorganic filler than both PVA-based resin containing unit derived from silyl group-containing monomer but not containing 1,2-diol unit in a side chain and PVA-based resin containing 1,2-diol unit in a side chain but not containing silyl group-containing unit, a film adhesive appropriately containing inorganic fillers for giving intended properties may be produced.

The method for producing a film by melt extrusion is a method of heat melting adhesive resin and its resin composition, and extruding to obtain film. Since the silyl group-containing PVA-based resin of the invention has a lower melting point due to 1,2-diol unit in a side chain than a typical PVA-based resin without 1,2-diol unit in a side chain, the method for producing a film by melt extrusion may be appropriately performed.

In order to adjust the melting point of the adhesive to a temperature of melting process in film production, the adhesive of the invention may contain a desirable plasticizer. Examples of the plasticizer include ethyleneoxide adduct of polyalcohol such as aliphatic polyalcohol (e.g. ethylene glycol, hexanediol, glycerin, trimethylol propane, and diglycerin) or glycerin; various alkyleneoxide adduct such as ethyleneoxide, propyleneoxide, or mixed ethyleneoxide with propyleneoxide adduct; saccharides such as sorbitol, mannitol, pentaerythritol, xylol, arabinose, and ribulose; phenol derivative such as bisphenol A and bisphenol S; amide compound such as N-methylpyrrolidone; glucosides such as $\alpha$-methyl-D-glucoside; water and so on.

The film producing method by melt extrusion is performed in the range of usually 100 to 250 °C, however, may be performed at a low temperature selected from the range of 110 to 220 °C, or 140 to 210 °C, in the case of the adhesive using silyl group-containing PVA-based resin or its composition of the invention. This is because the silyl group-containing PVA-based resin even having a high saponification degree can be melt to form a film at such low temperature. Further, a silyl group-containing PVA-based resin having a decreased saponification degree can be melt extruded to produce a film at a lower temperature.

Thus produced film adhesive has a thickness of usually 20 to 2500 $\mu$m, preferably 30 to 2300 $\mu$m, more preferably 50 to 2000 $\mu$m, depending on intended property or types of substrate. Unduly thin film adhesive is difficult to achieve a satisfied adhesive strength, on the contrary, unduly thick adhesive is difficult to be removed by cleaning after use, which are not preferable. Furthermore, in order to prevent films from cohering each other during preservation, or make it easier to rework after laying over a substrate, a surface of the film adhesive may be embossed or treated with uneven mat.

Thus produced film adhesive can exhibit adhesion by slightly wetting its surface with water to be swelled, and subsequently can exhibit remarkably strong adhesiveness with decreasing moisture amount in the adhesive by being dried or through migration of the moisture into film or the substrate.

In industrial use, bonding is preferably achieved by wetting either a surface of adherend or film adhesive with water and binding them. A method of filling water between adherend and film adhesive, and squeezing water by press or with press roller, known as wet & squeeze lamination, may be employed. These bonding processes can be conducted at a normal temperature, however, appropriately heating after lamination is preferable for shortening drying time.

[Coating solution]

A coating solution of the invention is characterized by that the silyl group-containing PVA-based resin of the invention is contained. Specifically, the coating solution of the invention is a solution in which the silyl group-containing PVA-based resin is dissolved in a solvent.

Aqueous mediums listed for the liquid adhesive may be preferably used for the solvent in the point of operational safety and handling property.

The coating solution may contain various additives including inorganic filler, organic filler, antifoamer, corrosion inhibitor, antimold agent, preserving agent, leveling agent, pigment dispersing agent, thickener, flow improving agent, surfactant, releasing agent, permeating agent, dye, pigment, fluorescent brightening agent, ultraviolet absorber, antioxidant, paper strengthening agent, and crosslinking agent, according to needs.

The content of these filler and/or additive depends on types of coating solution or use. In the case of inorganic filler, the weight ratio (A/B) of contents of the silyl group-containing PVA-based resin (A) to the inorganic filler (B) is in the range of usually 10/90 to 99/1, preferably 20/80 to 80/20, more preferably 30/70 to 60/40, particularly preferably 30/70 to 50/50. Since the silyl group-containing PVA-based resin of the invention has high affinity to inorganic filler, the inorganic filler can be stably dispersed in the coating solution containing inorganic filler at an even high content ratio (A/B) of 50/50 or less.

The coating solution containing an inorganic filler would provide a coating film resistant to contraction caused by drying, because the silyl group-containing PVA-based resin has excellent affinity to inorganic filler. In particular, the coating solution containing inorganic microparticles as the inorganic filler can avoid generation of macroparticle as agglutinate of the inorganic microparticles even if the content of the inorganic microparticles is relatively high, and moreover, would form a coating film in which the inorganic microparticles are dispersed on the adherend by virtue of difficulty in crystallization of the silyl group-containing PVA-based resin. This phenomenon allows to increase the content of inorganic filler, especially inorganic microparticles, compared with a coating composition employing a PVA-based resin containing 1,2-diol unit in a side chain but not containing silyl group-containing unit, and PVA-based resin containing silyl group-containing unit but not containing 1,2-diol unit in a side chain.

[Coating solution for ink-jet recording medium and ink-jet recording medium]

Since the silyl group-containing PVA-based resin of the invention has excellent affinity to an inorganic filler such as inorganic microparticles, the coating solution of the invention may contain inorganic filler in a relatively high content. Accordingly, the coating solution is suitable for a coating solution for ink-jet recording medium. An ink-jet recording medium of the invention may be produced by forming a coating layer of the inventive coating solution on a support substrate.

That is to say, the coating solution for a ink-jet recording medium comprises silyl group-containing PVA-based resin, inorganic microparticles, and dispersion medium.

The ink-jet recording medium of the invention comprises a coating layer containing a silyl group-containing PVA-based resin and inorganic microparticles. The coating layer may be an ink receiving layer or glossy layer.

Aqueous medium such as water or a mixture of water and alcohol, which are listed for the coating solution or adhesive, especially water, may be preferably used for the dispersion medium from the viewpoint of operational safety and handling property. A manner of dissolving or dispersing the inorganic microparticles and silyl group-containing PVA-based resin in a dispersion medium is not limited. A typical manner is to prepare an aqueous solution of the silyl group-containing PVA-based resin (A) and dispersing inorganic microparticles (B) in the aqueous solution. A known mixer such as high speed homogenizer or a known method may be employed for the dispersion.

Non-limiting examples of the inorganic microparticles used for the invention include carbonate such as calcium carbonate, magnesium carbonate, and zinc carbonate; sulfate such as calcium sulfate and barium sulfate; silicate such as aluminum silicate, magnesium silicate, and calcium silicate; silicon oxide such as amorphous silica, fumed silica, and colloidal silica; kaolin, clay, talc, titanium dioxide, zinc oxide, zinc hydroxide, zinc sulfide, hydrotalcite, alumina, alumina sol, aluminum hydroxide, zeolite, magnesium hydroxide, zirconium oxide, zirconium hydroxide, cerium oxide, and a combination of two or more of them. In the case that the coating layer needs high gloss as a glossy layer, colloidal silica, fumed silica, alumina sol, or the like inorganic microparticle is preferably contained. In the case that the coating layer as ink receiving layer needs ink absorbency rather than gloss, amorphous silica is preferably contained.

A glossy layer for the coating layer contains inorganic microparticles having an average particle size selected from the range of preferably 3 to 200 nm, particularly 3 to 100 nm, more particularly 10 to 50 nm. Use of inorganic microparticles having an average particle size less than 3 nm results in too narrow distance between inorganic microparticles and too small spaces in the glossy layer, which may cause to lower permeability of ink during printing, and feathering or ink spots. On the contrary, use of inorganic microparticles having an average particle size more than 200 nm results in lowering the gloss of the glossy layer due to its surface impaired in smoothness.

On the other hand, an ink receiving layer contains inorganic microparticles having an average particle size of preferably 0.1 to 50 μm, particularly 0.3 to 30 μm, more particularly 0.5 to 20 μm. Use of inorganic microparticles having an average particle size less than 0.1 μm result in too narrow distances between the inorganic microparticles and too small spaces in the glossy layer, which may cause to lower absorbability of ink, and feathering or ink spots. On the contrary, use of inorganic microparticles having an average particle size more than 50 μm results in lowering smoothness of the surface of the ink receiving layer. In the case of mat type surface, its texture is lowered due to the lowered smoothness. In this case, addition of a glossy layer over the ink receiving layer for obtaining gloss is not effective, because satisfied gloss is achieved only by a thick glossy layer resulting in low ink absorbency.

According to the recording medium of the invention, the weight ratio (A/B) of the contents of silyl group-containing PVA-based resin (A) to the inorganic microparticles (B) is preferably selected from the range of 10/90 to 90/10, particularly 20/80 to 80/20, more particularly 30/70 to 50/50, in the case of a glossy layer as a coating layer.

In the case of an ink receiving layer as a coating layer, the weight ratio (A/B) of the contents of the PVA-based resin (A) to the inorganic microparticles (B) is preferably selected from the range of 5/100 to 100/100, particularly 10/100 to 50/100, more particularly 10/100 to 30/100.

Even if the content ratio (A/B) of silyl group-containing PVA-based resin to inorganic microparticles is relatively small, the silyl group-containing PVA-based resin of the invention can bond without generation of macro agglutinate of inorganic microparticles to provide a coating layer free from contraction. This effect is not obtained in the case of employing a PVA-based resin containing 1,2-diol unit in a side chain but not containing silyl group-containing unit and a typical PVA-based resin containing neither 1,2-diol unit in a side chain nor silyl group-containing unit. Therefore, the coating layer could have higher content ratio of inorganic microparticles to the silyl group-containing PVA-based resin. In other words, a coating layer in which inorganic microparticles are dispersed could be obtained even if the content of PVA-based resin as a binder is decreased, as a result, it is possible to increase void content of the coating layer such as glossy layer or ink receiving layer without impairing smoothness or gloss of the surface thereof.

The coating layer may be produced usually by applying the coating solution for ink-jet recording medium on a support substrate, and drying.

The support substrate is not limited, but includes paper (e.g. board paper such as manila board, white board, liner; printing paper such as high-quality paper, middle-quality paper, and gravure paper; high-, middle-, or low- level

paper; news print paper; release paper; carbon paper, non-carbon paper, glassine paper), resin coated paper, synthetic paper, non-woven fabric, fabric, metal foil, polyolefin resin (e.g. thermoplastic resin such as polyethylene, PET, polypropylene, polyvinyl chloride, ethylene-propylene copolymer, and ethylene-vinyl acetate copolymer) film or sheet.

A known coating technique such as bar coater, air knife coating, blade coating, and curtain coating may be employed for laying ink receiving layer on a support substrate or laying a glossy layer over an ink receiving layer. A coating amount of the coating composition (solution) is preferably determined so that the thickness of the dry ink receiving layer would be from 3 to 100 μm, preferably 5 to 80 μm, more preferably 10 to 50 μm, and so that the thickness of the dry glossy layer would be from 1 to 20 μm, preferably 1 to 10 μm, more preferably 1 to 5 μm.

The coating layer such as glossy layer and ink receiving layer in the ink-jet recording medium of the invention may contain any other water-soluble or water-dispersive resin besides the silyl group-containing PVA-based resin and inorganic microparticles. Non-limiting examples of the other containable water-soluble or water-dispersive resin include starch; starch derivative such as oxidated starch and cation modified starch; natural-based protein such as gelatin and casein; cellulose derivative such as methylcellulose, ethyl cellulose, hydroxyethyl cellulose, and CMC; unmodified PVA; PVA derivative such as cation-modified PVA, carboxylic acid-modified PVA, sulphonic acid-modified PVA, low-level ethylene modified PVA having ethylene content of 15 mol% or less, partially saponified ethylene-vinyl acetate copolymer; natural polysaccharides polyvinylpyrrolidone such as sodium alginate and pectic acid; water-soluble resin such as poly(meta) acrylate; SBR latex, NBR latex, vinyl acetate resin-based emulsion, ethylene-vinyl acetate copolymer emulsion, (meta)acryl ester resin-based emulsion, vinyl chloride resin-based emulsion, urethane resin-based emulsion, and so on.

The coating layer may contain a cationic resin as a fixing agent for anionic ink. Non-limiting examples of the cationic resin include polyalkylene polyamine such as polyethylene polyamine and polypropylene polyamine, or a derivative thereof; acryl polymer having secondary amino group or tertiary amino group, or quaternary ammonium salt thereof; polyvinylamine copolymer, polyvinyl amidine copolymer, dicyandiamide-formalin copolymer, dimethylamine-epichlorohydrin copolymer, acrylamide-diallylamine copolymer, and diallyldimethyl ammonium chloride copolymer.

In addition, pigment dispersing agent, thickener, flow improving agent, surfactant, antifoamer, releasing agent, permeating agent, dye, pigment, fluorescent brightening agent, ultraviolet absorber, antioxidant, preserving agent, antimold agent, paper strengthening agent, or crosslinking agent may be appropriately contained in the coating layer, if necessary. Since the silyl group-containing PVA-based resin of the invention has a higher affinity to an inorganic filler and less contraction in a dried film, comparing with a conventional PVA-based resin, the content of inorganic fillers in the coating layer may be increased without impairing film forming property and without increasing the content of silyl group-containing PVA-based resin as a binder. Accordingly, a variety of inorganic fillers may be contained for imparting desired properties with securing high ink absorbency.

Examples of the crosslinking agent include aldehyde-based compound (e.g. formaldehyde, acetaldehyde, glyoxal, and glutaric dialdehyde), amino resin (e.g. urea formaldehyde resin, guanamine resin, and melamine resin), epoxy-based compound (e.g. epoxy resin and polyamide polyamine epichlorohydrin), hydrazide compound (e.g. dihydrazide adipate, carbodihydrazide, and hydrazide polyacrylate), acid anhydride, isocyanate compounds (e.g. polyisocyanate and block isocyanate). Examples of the inorganic-based crosslinking agent include boron compound (e.g. boric acid and borate), titanium compound (e.g. tetraalkoxytitanate), aluminum compound (e.g. aluminum sulfate, aluminum chloride, and aluminum nitrate), phosphorus compound (e.g. phosphite, and bisphenol A-modified polyphosphoric acid), modified silicone compound (e.g. alkoxy-modified silicone, and glycidyl-modified silicone), zirconium compound (e.g. chlorohydroxyoxo zirconium, zirconium nitrate, and zirconyl nitrate (Daiichi Kigenso Kagaku Kogyo Co., Ltd. "Zircosol ZN"™). These crosslinking agents may be used in combination of two or more of them.

A coating layer may be usually formed by drying at 90 to 120 °C for 1 to 30 minutes or so, but not limited to this drying condition. For improving gloss or smoothness on the surface of the coating layer, a wet coating layer before being dried or by rewetting after dried with a solution for wetting may be pressed with a cast drum and dried.

As described above, the ink-jet recording medium of the invention has a glossy layer and/or ink receiving layer as a coating layer excellent in ink absorbency, gloss, transparency, and color development of ink, based on the character of the silyl group-containing PVA-based resin of the invention.

[Dispersing agent for emulsion and emulsion using the same]

A silyl group-containing PVA-based resin of the invention may be used as a dispersing agent for an emulsion. And an emulsion applicable for various use can be obtained by emulsion polymerizing a vinyl-based monomer in the presence of the dispersing agent. Thus obtained emulsion may be used as it is for emulsion type adhesive or binder; thickener for various aqueous solution or emulsion; coating agent; cement intimate mixing agent; flocculating agent for suspended or dissolved matter in water; modifier for filtrated water of pulp slurry; soil conditioner; photosensitive agent; coating solution for functional resin or membrane such as photosensitive resist resin, ion-exchange resin, chelate-exchange resin, and ion-exchange membrane; coating solution for ink-jet recording medium, and so on.

A method of emulsion polymerization with use of silyl group-containing PVA-based resin of the invention as a

dispersing agent for emulsion will be described.

As a catalyst for emulsion polymerization, a water-soluble polymerization catalyst such as potassium persulfate and ammonium persulfate may be preferably used alone or in combination. A redox catalyst such as hydrogen peroxide-tartaric acid, hydrogen peroxide-iron salt, hydrogen peroxide-ascorbic acid-iron salt, hydrogen oxide-Rongalit, and hydrogen oxide-Rongalit-iron salt, as well as catalyst consisting of redox catalyst and organic peroxide such as "KayabutylB" and "KayabutylA-50C" from Kayaku Akzo Corporation may be used. A persulfuric acid-based catalyst is preferably used from the viewpoint of adhesiveness resist to hot water of the emulsion.

Vinyl-based monomers usable for the emulsion polymerization include ethylene-based monomer and butadiene-based monomer. Examples of the ethylene-based monomer include vinyl acetate, acrylic acid, methacrylic acid, acrylic acid ester, methacrylic acid ester, vinyl chloride, vinylidene chloride, acrylonitrile, and styrene. Each monomer may be homo- or co-polymerized.

Examples of the butadiene-based monomer include 1,3-butadiene, 2-methyl butadiene, 1,3- or 2,3-dimethyl butadiene, and 2-chloro-1,3-butadiene. Each monomer may be used solely or in combination with an ethylenic unsaturated monomer. Of these monomers may be copolymerized in combination as follows:1,3-butadiene and styrene; 1,3-butadiene and styrene and (meth)acrylic acid; 1,3-butadiene and acrylonitrile; 1,3-butadiene, acrylonitrile and styrene; 1,3-butadiene, acrylonitrile, and (meth)acrylic acid; 1,3-butadiene and methyl methacrylate; 1,3-butadiene, methyl methacrylate, and (meth)acrylic acid.

If necessary, additional dispersing agent may be used. Examples of the other dispersing agent include surfactant including anionic surfactant such as dodecyl benzene sulfonic acid and fatty acid salt; and nonionic surfactant; cellulose derivative such as carboxymethyl cellulose, hydroxyethyl cellulose and methylcellulose; polyacrylic acid derivative; emulsifier such as maleic acid (or maleic anhydride)-vinyl ether copolymer, maleic acid (or maleic anhydride)-vinyl acetate copolymer, saponified vinyl acetate-methallyl sulfonic acid (or salt) copolymer; plasticizer such as phthalic acid ester and phosphate; pH adjusting agent such as sodium carbonate, sodium acetate, and sodium phosphorate. Also, any known PVA-based resin other than silyl group-containing PVA-based resin used in the invention may be appropriately used.

The vinyl-based monomer may be polymerized with use of the silyl group-containing PVA-based resin as a dispersing agent. The silyl group-containing PVA-based resin in the form of microparticles or aqueous solution may be added to water as a medium. The added amount of the silyl group-containing PVA-based resin depends on modification amount of the silyl group-containing PVA-based resin or the content of the resin in its emulsion. In general, the added amount is appropriately determined from the range of 1 to 50 %, preferably 2 to 20 % by weight based on vinyl-based monomer. In the case of vinyl acetate-based monomer used for the vinyl-based monomer, the polymerization degree of the silyl group-containing PVA-based resin is preferably from 500 to 3000. In the case of acryl ester-based monomer mainly used for the vinyl-based monomer, the polymerization degree of the silyl group-containing PVA-based resin is preferably from 250 to 500.

The vinyl-based monomer may be added in batch with the aqueous solution of the silyl group-containing PVA-based resin and then the polymerization may be initiated. Alternatively, part of vinyl-based monomer may be added into the aqueous solution of the silyl group-containing PVA-based resin and then may be polymerized with adding droplet of remainder of the vinyl-based monomer.

The polymerization is performed in the presence of the above-mentioned polymerization catalyst at a temperature of 60 to 80 °C. The polymerization catalyst may be added in batch at the initiation of the polymerization or added separately. The polymerization may be continued for 0.5 to 10 hours. The polymerization may be stretched at 70 to 80 °C for usually from 0.5 to 3 hours, preferably 1 to 2 hours, but not limited thereto.

Thus emulsion polymerization is terminated. The polymerization system may be cooled to 40 °C or less within preferably 4 hours, more preferably 2 hours, furthermore preferably 1 hour after termination of the emulsion polymerization. If more than 4 hours are taken, the viscosity of the obtained emulsion notably varies for every lot, as well as the preservation stability of the emulsion tends to be lowered. In this specification, the termination of the polymerization means the time of the end of addition of the monomer and final stop of heating the polymerization system.

The emulsion of the invention may be used directly for one-pack type adhesive. In this case, the resin content of the emulsion is adjusted to the range of 20 to 50 wt%.

Additives such as crosslinking agent, filler, antifoamer, colorant, film formation assistant, antiseptic agent, mothproofing agent, and corrosion inhibitor may be added in the amount of 1 to 30 % by weight based on resin. In particular, the use of the crosslinking agent enables the adhesiveness resistant to hot water to be significantly improved. Preferable examples of the crosslinking agent include polyisocyanate, glyoxal, water-soluble melamine resin, polyfunctional epoxy resin, amine compound such as metaxylene diamine and ethylenediamine, and various metal (e.g. Ti, Zr, Mg, or Al)-based compound such as aluminum sulfate, and most preferable crosslinking agent is polyisocyanate and glyoxal.

In the case that the emulsion containing silyl group-containing PVA-based resin is used as a cement intimate mixing, the emulsion may be used in the manner of i) preliminarily mixing with cement; ii) preliminarily mixing with water;

or iii) mixing with cement and water at one time.

The mixing amount of the emulsion based on the cement of 100 parts by weight is in the range of preferably 5 to 30 parts by weight, more preferably 10 to 30 parts by weight from the point of physical properties of the resulting cured product, particularly 5 to 15 parts by weight, further more preferably 8 to 12 parts by weight, from the economic point.

## EXAMPLE

The present invention will be described with examples, however, the invention is not limited by the following examples.

Incidentally, "parts" and "%" is meant on the weight basis unless otherwise indicated.

[Method of analysis]

PVA-based resins synthesized by the following examples were analyzed by the following method.

(1) Content of silyl group-containing unit (mol%)

$^1$H-NMR (400Hz, proton NMR, solvent: deuterochloroform, temperature: 23 °C) of polymers before saponification is measured with use of AVANCEIII HD400 from BRUKER, and the content of the silyl group-containing unit is determined based on the obtained NMR spectrum. The relationship between protons of units and their chemical shifts is shown in Fig. 1.

Determination of the content of the silyl group-containing unit was based on the calculation by the following formula with peak(X) derived from 3.56 ppm of vinylmethoxysilane and peak(Y) derived from 4.84 ppm of vinyl acetate.

$$\text{formula for calculation: } (X/9)\times Y$$

(2) Content of 1,2-diol unit in a side chain (mol%)

The content of 1,2-diol unit in a side chain is determined by measuring $^1$H-NMR (400 MHz, proton NMR, solvent: deuterium oxide solution, temperature: 50 °C) with use of AVANCEIII HD400 from BRUKER, and calculating based on the integrated value of the obtained NMR spectrum. The relationship between protons of units and their chemical shift is shown in Fig. 2.

(3) Saponification degree (mol%)

A saponification degree is determined by calculation based on the amount of alkali consumption necessary for hydrolyzing residue vinyl acetate and 3,4-diacetoxy-1-butene.

(4) Average polymerization degree

An average polymerization degree is measured according to JIS K 6726.

[Production of PVA-based resin]

PVA-based resin 1:

Into a reactor equipped with reflux condenser, dropping funnel, and stirrer, 1000 parts of vinyl acetate, 10 parts of methanol, 1.3 parts of vinyl trimethoxysilane, and 10 mol% (relative to the amount of vinyl acetate) of 3,4-diacetoxy-1-butene as well as 0.024 mol% (relative to vinyl acetate) of azobisisobutyronitrile were fed, and initiated to polymerize by elevating temperature of the reaction system under blowing nitrogen with stirring. After initiation of polymerization, a solution containing 2.6 parts of vinyl trimethoxysilane and 40 parts of methanol was dropped. At the time that the vinyl acetate has been polymerized to 63 % of the polymerization rate, the polymerization was stopped by adding m-dinitrobenzene in a predetermined amount, and subsequently removing unreacted vinyl acetate monomer from the reaction system, to obtain a methanol solution of copolymer. The copolymer had a content of silyl group-containing unit of 0.2 mol% determined based on the above-mentioned measuring method. The obtained NMR spectrum (400Hz, proton NMR, solvent: deuterochloroform, temperature: 23 °C) is shown in Fig. 3.

Next, the content of the copolymer in the methanol solution was adjusted to 8 wt% and put in a reaction vessel. The copolymer was saponified under maintaining the temperature of the solution at 40 °C by adding a methanol solution having sodium hydroxide concentration of 2 % (converted to sodium content) so that the amount of sodium hydroxide being 10 mmol relative to 1 mol of the total amount of vinyl acetate structural unit and 3,4-diacetoxy-1-butene structural unit in the copolymer. Saponified copolymer was precipitated with proceeding the saponification, and was filtrated at the time that the saponified copolymer became particulate. The separated particulate was neutralized with acetic acid (20 wt%)/methanol solution, and washed well with methanol, followed by drying in hot air dryer, thereby obtaining PVA-based resin 1.

The PVA-based resin 1 were measured with respect to saponification degree, average polymerization degree, and content of 1,2-diol structural unit in a side chain according to the measuring methods mentioned above respectively. The PVA-based resin 1 had a saponification degree of 99.3 mol% and average polymerization degree of 850. With respect to the content of 1,2-diol unit in a side chain, as actually introduced amount of 1,2-diol unit into polymer chain was 8.7 mol%, regardless of 10 mol% of the fed amount. The NMR spectrum (400MHz, proton NMR, solvent: deuterium oxide solution, temperature: 50 °C) of the PVA-based resin 1 is shown in Fig. 4.

PVA-based resin 2:

Into a reactor equipped with reflux condenser, dropping funnel, and stirrer, 1000 parts of vinyl acetate, 10 parts of methanol, 4.5 parts of vinyl trimethoxysilane, and 10 mol% (relative to the amount of vinyl acetate) of 3,4-diacetoxy-1-butene as well as 0.015 mol% (relative to vinyl acetate) of azobisisobutyronitrile were fed, and initiated to polymerize by elevating temperature of the reaction system under blowing nitrogen with stirring. After initiation of polymerization, methanol solution containing 0.7 parts of vinyl trimethoxysilane and 40 parts of methanol was dropped. At the time that the vinyl acetate has been polymerized to 51 % of polymerization rate, the polymerization was stopped by adding m-dinitrobenzene in a predetermined amount, and subsequently removing unreacted vinyl acetate monomer from the reaction system, to obtain a methanol solution of copolymer. The copolymer had a content of silyl group-containing unit of 0.5 mol% determined based on the above-mentioned measuring method. The NMR spectrum (400Hz, proton NMR, solvent: deuterochloroform, temperature: 23 °C) of the obtained copolymer is shown in Fig. 5.

Next, the content of the copolymer in the obtained methanol solution was adjusted to 8 wt% and put in a reaction vessel. The copolymer was saponified under maintaining the temperature of the solution at 40 °C by adding a methanol solution having sodium hydroxide concentration of 2 % (converted to sodium content) so that the amount of sodium hydroxide being 10 mmol relative to 1 mol of the total amount of vinyl acetate structural unit and 3,4-diacetoxy-1-butene structural unit in the copolymer. A saponified copolymer was precipitated with proceeding the saponification, and was filtrated at the time that the saponified copolymer became particulate. The separated particulate was neutralized with acetic acid (20 wt%)/methanol solution, and washed well with methanol, followed by drying in hot air dryer, thereby obtaining PVA-based resin 2.

The obtained PVA-based resin 2 had a saponification degree of 99.9 mol% and average polymerization degree of 1000. With respect to the content of 1,2-diol unit in a side chain, as actually introduced amount of 1,2-diol unit into polymer chain was 6.5 mol%, regardless of 10 mol% of the fed amount. The obtained NMR spectrum (400MHz, proton NMR, solvent: deuterium oxide solution, temperature: 50 °C) of the PVA-based resin 2 is shown in Fig. 6.

PVA-based resin 3:

Into a reactor equipped with reflux condenser, dropping funnel, and stirrer, 800 parts of vinyl acetate, 800 parts of methanol, and 0.075 mol% (relative to the amount of vinyl acetate) of azobisisobutyronitrile were fed, and initiated to polymerize by elevating temperature of the reaction system under blowing nitrogen with stirring. After initiation of polymerization, methanol solution containing 2.32 parts of vinyl trimethoxysilane and 160 parts of methanol was dropped. At the time that the vinyl acetate has been polymerized to 78 % of polymerization degree, the polymerization was stopped by adding m-dinitrobenzene in a predetermined amount, and subsequently removing unreacted vinyl acetate monomer from the reaction system, to obtain a methanol solution of copolymer. The copolymer had a content of silyl group-containing unit of 0.3 mol% determined based on the above-mentioned measuring method. The NMR spectrum (400Hz, proton NMR, solvent: deuterochloroform, temperature: 23 °C) of the obtained copolymer is shown in Fig. 7.

Next, the content of the copolymer in the obtained methanol solution was adjusted to 8 wt% and put in a reaction vessel. The copolymer was saponified under maintaining the temperature of the solution at 40 °C by adding a methanol solution having sodium hydroxide concentration of 2 % (converted to sodium content) so that the amount of sodium hydroxide being 10 mmol relative to 1 mol of vinyl acetate structural unit in the copolymer. A saponified copolymer was precipitated with proceeding the saponification, and was filtrated at the time that the saponified copolymer became particulate. The separated particulate was neutralized with acetic acid (20 wt%)/methanol solution, and washed well with methanol, followed by drying in hot air dryer, thereby obtaining PVA-based resin 3. The PVA-based resin 3 had a

saponification degree of 99.1 mol% and average polymerization degree of 700. The obtained NMR spectrum (400MHz, proton NMR, solvent: deuterium oxide solution, temperature: 50 °C) of the PVA-based resin 3 is shown in Fig. 8.

PVA-based resin 4:

Into a reactor equipped with reflux condenser, dropping funnel, and stirrer, 70 parts of vinyl acetate, 7 parts of methanol, and 10 mol% (relative to the amount of vinyl acetate) of 3,4-diacetoxy-1-butene were fed, and initiated to polymerize by adding 0.058 mol% of acetyl peroxide and elevating temperature of the reaction system under blowing nitrogen with stirring. At the time that the vinyl acetate has been polymerized to 73 % of the polymerization degree, the polymerization was stopped by adding m-dinitrobenzene in a predetermined amount, and subsequently removing unreacted vinyl acetate monomer from the reaction system, to obtain a methanol solution of the copolymer.

Next, the content of the copolymer in the obtained methanol solution was adjusted to 8 wt% and put in a reaction vessel. The copolymer was saponified under maintaining the temperature of the solution at 40 °C by adding a methanol solution having sodium hydroxide concentration of 2 % (converted to sodium content) so that the amount of sodium hydroxide being 10 mmol relative to 1 mol of the total amount of vinyl acetate structural unit and 3,4-diacetoxy-1-butene structural unit in the copolymer. Saponified copolymer was precipitated with proceeding the saponification, and was filtrated at the time that the saponified copolymer became particulate. The separated particulate was neutralized with acetic acid (20 wt%)/methanol solution, and washed well with methanol, followed by drying in hot air dryer, thereby obtaining PVA-based resin 4.

The PVA-based resin 4 had saponification degree of 99.6 mol% and average polymerization degree of 770. The content of 1,2-diol structural unit in a side chain of the PVA-based resin 4 as actual modification rate was 7.5 mol%, regardless of 10 mol% as the fed amount. The NMR spectrum (400MHz, proton NMR, solvent: deuterium oxide solution, temperature: 50 °C) of the PVA-based resin 4 is shown in Fig. 9.

[Preparation and evaluation of adhesive]

Each of thus obtained PVA-based resins 1 to 4 was dissolved in distilled water to prepare 4 wt% of aqueous solution of polyvinyl alcohol-based resin. The obtained aqueous solutions were used as respective adhesives of Example 1 for PVA-based resin 1, Example 2 for PVA-based resin 2, Comparative Example 1 for PVA-based resin 3, and Comparative Example 2 for PVA-based resin 4. The respective viscosity at 20 °C of the 4 wt% aqueous solution of respective PVA-based resin was measured with Hoppler viscometer.

With respect to Examples 1 and 2, and Comparative Example 1, defoaming property and adhesive strength were evaluated according to the methods described below. Adhesive strength of Comparative Example 2 was evaluated. The evaluated results are shown in Table 1.

(1) Defoaming property

The liquid adhesive prepared above of 260 ml was put in 1000 ml measuring cylinder having 6.5 mm-diameter (JIS standard). Air was blown into the liquid adhesive at 300 ml/min for 180 seconds in the atmosphere of 40 °C to form bubbles in the liquid adhesive. The largest amount of bubbles formed and time (sec.) from forming bubbles until disappearing them, i.e. defoam time, were measured.

(2) Adhesive strength

A surface of thick glass board was coated with liquid adhesive thus prepared at a rate of 0.05g/$cm^2$, and thereafter was laminated with 140 mesh of nylon net having width 2 cm, and dried at 100 °C for 60 min., and at 150 °C for 60 min, to obtain a sample for evaluation. The amount of the adhesive used for the sample was 0.35g/$cm^2$. Thus produced samples are subjected to conduct a 180° peeling test at 50 mm/min for determing adhesive strength (N/ 20 mm).

[Table 1]

| | | Example 1 | Example 2 | Comparative Example 1 | Comparative Example 2 |
|---|---|---|---|---|---|
| PVA-based resin No. | | 1 | 2 | 3 | 4 |
| Characters of PVA | Polymerization degree | 850 | 1000 | 700 | 770 |
| | Saponification degree (mol%) | 99. 3 | 99. 9 | 99. 1 | 99. 6 |
| | 1,2-diol unit in a side chain (mol%) | 8. 7 | 6. 5 | 0 | 7. 5 |
| | Silyl group-containing unit (mol%) | 0. 2 | 0. 5 | 0. 3 | 0 |
| | Viscosity (4wt% aqueous solution) (mPa·s) | 9. 2 | 11. 4 | 7. 1 | 8. 0 |
| Evaluation | Bubble height (mm) | 27 | 36 | 213 | — |
| | Defoam time (second) | 30 | 45 | 270 | — |
| | Adhesive strength(N/20mm) | 11. 7 | 9. 0 | 6. 0 | 9. 1 |

Comparative Example 1 employs PVA-based resin 3 containing silyl group-containing unit but not containing 1,2-diol unit in a side chain.

Example 1 employs PVA-based resin 1 containing both silyl group-containing unit and 1,2-diol unit in a side chain. Example 1 had lower bubble height and shorter defoam time than Comparative Example 1 regardless of similar content of the silyl group-containing unit. The bubble height and defoam time of Example 1 were about one tenth of those of Comparative Example 1 respectively. From these results, it is understood that PVA-based resin 1 has a difficulty in forming bubbles and readily eliminates formed bubbles.

The adhesive of Comparative Example 1 employing PVA-based resin 3 had about seven times bubble height and defoam time of those of Example 2 employing PVA-based resin 2 which has twice content of the PVA-based resin 3 in silyl group-containing unit.

From these results, it is understood that improvement of defoaming property could be obtained by coexistence of 1,2-diol unit in a side chain and silyl group-containing unit.

Adhesive strength of Comparative Examples 1 employing PVA-based resin 3 was lower than that of adhesive employing PVA-based resin 1 or 2, in which both silyl group-containing unit and 1,2-diol unit in a side chain are contained, and also lower than that of Comparative Example 2 employing PVA-based resin 4 containing 1,2-diol unit in a side chain but not containing silyl group-containing unit.

[Addition of inorganic filler and formation of coating film]

Coating solution using one of thus synthesized PVA-based resins 1 to 4 and having different content of inorganic filler from each other were prepared and evaluated.

As the inorganic filler, colloidal silica "SNOWTEX40"® (particle diameter of 40 nm) from Nissan Chemical Industry was used to prepare aqueous dispersion having 8 wt% of this colloidal silica. A coating solution was prepared by mixing the aqueous dispersion with the PVA-based resin aqueous solution so that the weight ratio (PVA/inorganic microparticle) of solid contents of PVA to inorganic microparticles being values shown in Table 2.

Thus prepared coating solution were poured into square chase having 10 cm on a side, and left standing in the condition of 23 °C and 50RH% for 48 hours to obtain a coating film. The film forming property, transparency, and appearance of the coating film were evaluated according to the evaluation method described below. The results are shown in Table 2.

Adhesive employing PVA-based resin 4 and having a ratio (PVA/colloidal silica) of contents of the PVA-based resin to colloidal silica of 40/60 or less could provide a coating film, and therefore the appearance was not evaluated.

(1) Film formation property

Film formation property was evaluated according to the following criteria.

Bad: no film capable of being taken out from the chase was obtained;
Poor: a film capable of being taken out was obtained but there was aperture between dry film and the chase; and
Excellent: a film without contraction was possible to be taken out.

(2) Transparency of coating film

Transparency of dry film was evaluated based on its haze value, which was measured with turbidity meter NDH-2000 from NIPPON DENSHOKU INDUSTRIES CO.,LTD.. Haze value less than 5 was evaluated as "Excellent" and haze value 5 or more was evaluated as "Bad".

(3) Appearance of coating film

The obtained coating film was visually evaluated with respect to warp, gloss, and presence or absence of craze as the following criteria.

Bad: craze was visually realized;
Poor: no problematic craze without gloss was realized, but warp was visually realized;
Excellent: neither craze nor warp was visually realized and gloss was imparted; and
-: no evaluation because it is difficult to take out film.

[Table 2]

| PVA-based resin No. | Characters of PVA-based resin | | | PVA/ Inorganic particle (weight ratio) | Evaluation of coating film | | | |
|---|---|---|---|---|---|---|---|---|
| | Polymerization degree | Si content ratio (mol%) | 1,2-diol content ratio (mol%) | | Film formation property | Haze value | Transparency of film | Appearance of coating film |
| 1 | 850 | 0.2 | 8.7 | 100/0 | ○ | 0. 4 | ○ | ○ |
| | | | | 80/20 | ○ | 0. 3 | ○ | ○ |
| | | | | 60/40 | ○ | 0.7 | ○ | ○ |
| | | | | 40/60 | ○ | 0.4 | ○ | ○ |
| | | | | 30/70 | ○ | 0. 6 | ○ | ○ |
| 2 | 1000 | 0.5 | 6.5 | 100/0 | ○ | 1.7 | ○ | ○ |
| | | | | 80/20 | ○ | 0.6 | ○ | ○ |
| | | | | 60/40 | ○ | 0.7 | ○ | ○ |
| | | | | 40/60 | ○ | 0.7 | ○ | ○ |
| | | | | 30/70 | ○ | 0.5 | ○ | ○ |
| 3 | 700 | 0.3 | - | 100/0 | ○ | 0.7 | ○ | ○ |
| | | | | 80/20 | ○ | 0.6 | ○ | ○ |
| | | | | 60/40 | Δ | 0.7 | ○ | Δ |
| | | | | 40/60 | Δ | 0.7 | ○ | Δ |
| | | | | 30/70 | Δ | 1.0 | ○ | Δ |
| 4 | 770 | - | 7.5 | 100/0 | ○ | 1.7 | ○ | ○ |
| | | | | 80/20 | ○ | 1.2 | ○ | ○ |
| | | | | 60/40 | ○ | 66. 2 | × | ○ |
| | | | | 40/60 | × | 91.3 | × | - |
| | | | | 30/70 | × | 92. 0 | × | - |
| ×: Bad, Δ:Poor, o:Excellent, -:No evaluation | | | | | | | | |

The adhesive employing PVA-based resin 4 containing 1,2-diol unit in a side chain but not containing silyl group-containing unit did not provide film when the content ratio (PVA/colloidal silica) was 40/60 or less. The adhesive employing PVA-based resin 3 containing silyl group-containing unit but not containing 1,2-diol unit in a side chain, provided coating film even when the content ratio (PVA/colloidal silica) was 30/70, however, provided coating film having unpreferable appearance due to contraction when the content ratio (PVA/colloidal silica) was 60/40 or less.

On the other hand, adhesives employing PVA-based resins 1 and 2 both corresponding to silyl group-containing PVA-based resin of the invention provided transparent and glossy coating films without craze even when the content weight ratio (PVA/colloidal silica) were 30/70 or less. This is a surprising result because adhesive employing a combination of PVA-based resin 3 and PVA-based resin 4 could not provide such good coating film. This result is supposed that PVA polymer containing both silyl group-containing unit and 1,2-diol unit in a side chain could have more improved affinity to inorganic filler than PVA polymer containing either silyl group-containing unit or 1,2-diol unit in a side chain unit, and crystallization during film formation of the former PVA polymer would be suppressed. Moreover, it is supposed that the 1,2-diol unit and silyl group could form a crosslinked structure, and thereby providing strainable film. Since the coating film formed by using coating solution comprising inorganic microparticles and a relatively decreased content of a silyl group-containing PVA-based resin of the invention could provide a coating layer such as ink receiving layer and glossy layer having improved ink receptivity without impairing gloss, the coating solution could provide an ink-jet recording medium suitable for high speed printing.

**INDUSTRIAL APPLICABILITY**

The silyl group-containing PVA-based resin has excellent in defoaming property without impairing coating property and adhesive strength to an inorganic filler, and therefore, can use for bonding or adhering between inorganic substrates or coating on inorganic substrate such as metal board, glass board and metal sheet even if coating or adhering operation is continuously conducted in its manufacturing process. Accordingly, the silyl group-containing PVA-based resin is useful for such bonding or adhering between inorganic substrates. In addition, the silyl group-containing PVA-based resin can provide a useful coating composition for coating layer of an ink-jet recording medium because the silyl group-containing PVA-based resin can provide a coating layer having a relatively high content of inorganic filler.

## Claims

**1.** A polyvinyl alcohol-based resin containing structural units represented by the following formula (1), (2), and (3),

[formula 1]

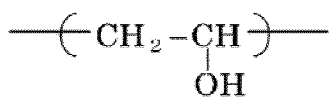

(1)

[formula 2]

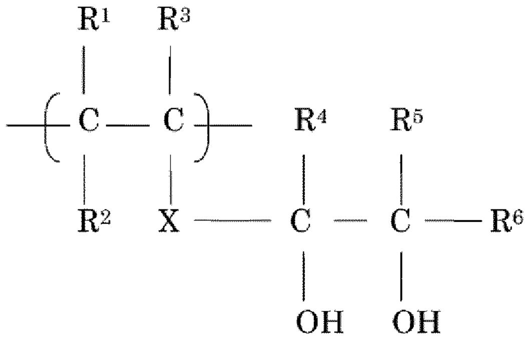

(2)

[formula 3]

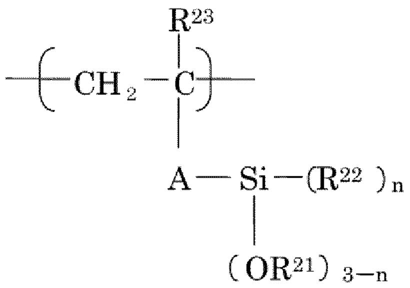

(3)

wherein in the formula (2) $R^1$, $R^2$,$R^3$, $R^4$, $R^5$, and $R^6$ each is independently hydrogen atom or an organic group, X is single bond or a binding chain without silicon atom,
in the formula (3), A is single bond or a binding chain, $-OR^{21}$ is hydroxyl group, an alkoxyl group or an acyloxy group, which may have a substituting group containing oxygen, $R^{22}$ is an alkyl group having from 1 to 5 carbon atoms, $R^{23}$ is hydrogen atom or an alkyl group having from 1 to 5 carbon atoms, n is integer from 0 to 2.

**2.** The polyvinyl alcohol-based resin according to claim 1, wherein a structural unit represented by the above formula (3) has n of 0.

**3.** The polyvinyl alcohol-based resin according to claim 1 or 2, wherein the content of the structural unit represented by the above formula (3) is in the range of 0.01 to 3 mol%.

**4.** The polyvinyl alcohol-based resin according to any one of claims 1 to 3, wherein the content of the 1,2-diol structural unit represented by the formula (2) is in the range of 0.1 to 30 mol%.

**5.** The polyvinyl alcohol-based resin according to any one of claims 1 to 4, having an average polymerization degree of 100 to 4000.

**6.** A resin composition comprising a polyvinyl alcohol-based resin according to any one of claims 1 to 5, and an inorganic filler.

**7.** An adhesive comprising a polyvinyl alcohol according to any one of claims 1 to 5.

**8.** A liquid adhesive comprising an aqueous medium and a polyvinyl alcohol-based resin according to any one of claims 1 to 5 dissolved in the aqueous medium.

**9.** A coating solution comprising a polyvinyl alcohol-based resin according to any one of claims 1 to 5.

**10.** A coating solution for ink-jet recording medium comprising polyvinyl alcohol-based resin according to any one of claims 1 to 5, inorganic microparticles, and a dispersion medium.

**11.** A ink-jet recording medium comprising a coating layer containing a polyvinyl alcohol-based resin according to any one of claims 1 to 5 and inorganic microparticles.

**12.** A vinyl ester-based resin comprising structural units represented by the following formula (1a) and (3), and a structural unit selected from the group consisting of units represented by the formula (Ia), (IIa), and (IIIa):

[formula 1a]

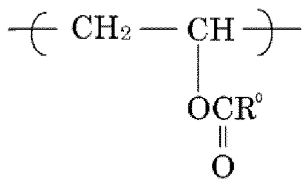

(1a)

[formula 3]

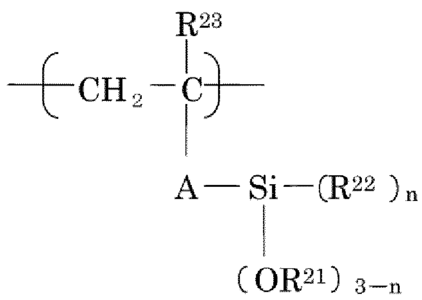

(3)

[formula 7-1]

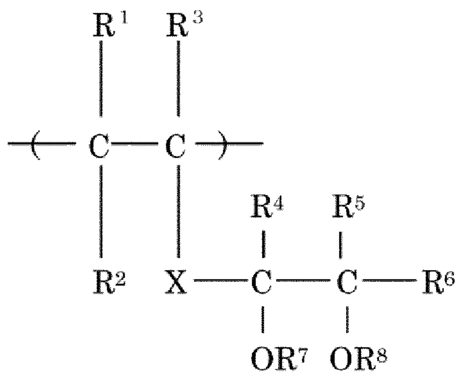

(I a)

[formula 7-2]

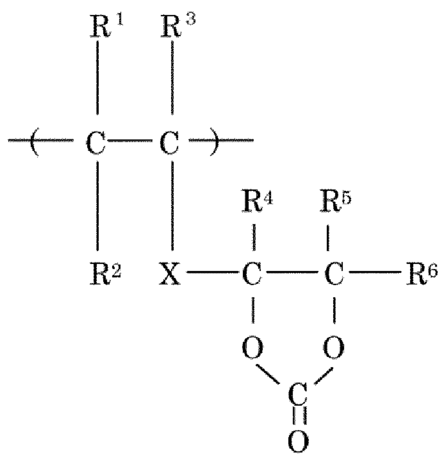

(II a)

[formula 7-3]

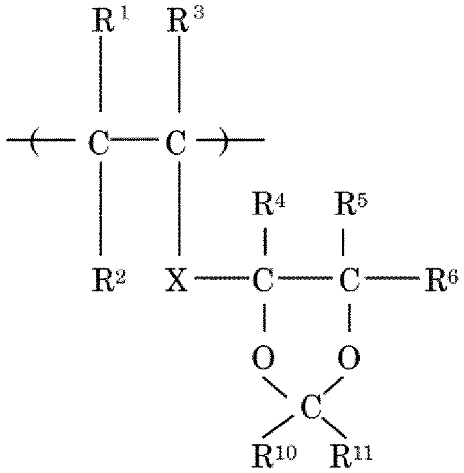

(IIIa)

wherein, in the formula (1a), $R^0COO$- is an acyloxy group which may have a substituting group, in the formula (3), A is single bond or a binding chain, $-OR^{21}$ is hydroxyl group, an alkoxyl or an acyloxy group, which may have a substituting group containing oxygen, $R^{22}$ is an alkyl group having from 1 to 5 carbon atoms, $R^{23}$ is hydrogen atom or an alkyl group having from 1 to 5 carbon atoms, n is an integer from 0 to 2; and in the formula (Ia), (IIa), and (IIIa), $R^1$, $R^2$, $R^3$, $R^4$, $R^5$ and $R^6$ each is independently hydrogen atom, or an organic group, X is single bond or a binding chain without silicon atom, $R^7$ and $R^8$ each is independently hydrogen atom or $R^9$-CO- wherein $R^9$ is an alkyl group, and $R^{10}$ and $R^{11}$ each is independently hydrogen atom or an alkyl group.

Fig. 1

| Chemical shift (ppm) | Group |
|---|---|
| 7.4 | $CHCl_3$ |
| 5.15-4.78 | ②,⑥ |
| 4.32-4.00 | ⑦ |
| 3.58-3.59 | ⑫ |
| 2.10-1.90 | ③,⑨,⑫,⑧ |
| 1.90-1.40 | ①,④,⑤,⑩ |
| 1.6-1.0 | ⑪ |

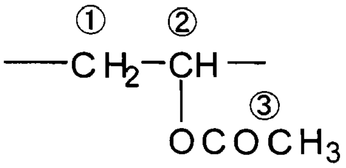
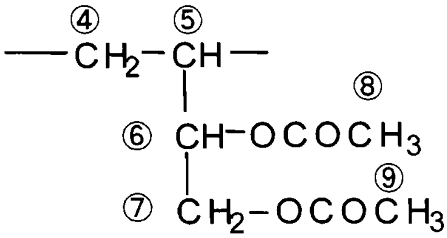
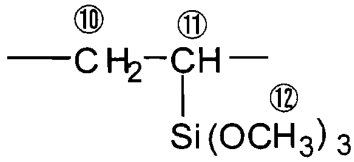

Fig. 2

| Chemical shift (ppm) | Group |
|---|---|
| 5.0 | ⑧ |
| 4.7 | $H_2O$ |
| 4.25-4.00 | ② |
| 3.99-3.95 | ⑤ |
| 3.94-3.92 | ⑥ |
| 3.53 | $CH_3OH$ |
| 2.30-2.27 | ⑨ |
| 2.08 | $CH_3COONa$ |
| 1.90-1.79 | ①,③,⑦,⑩ |
| 1.6-1.0 | ⑪,④ |

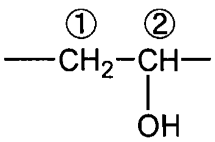
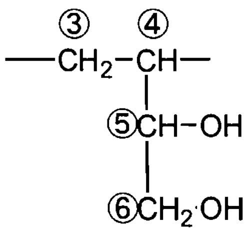
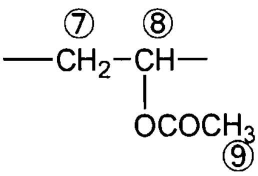
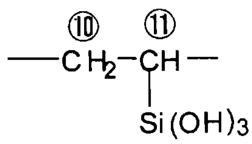

Fig. 3

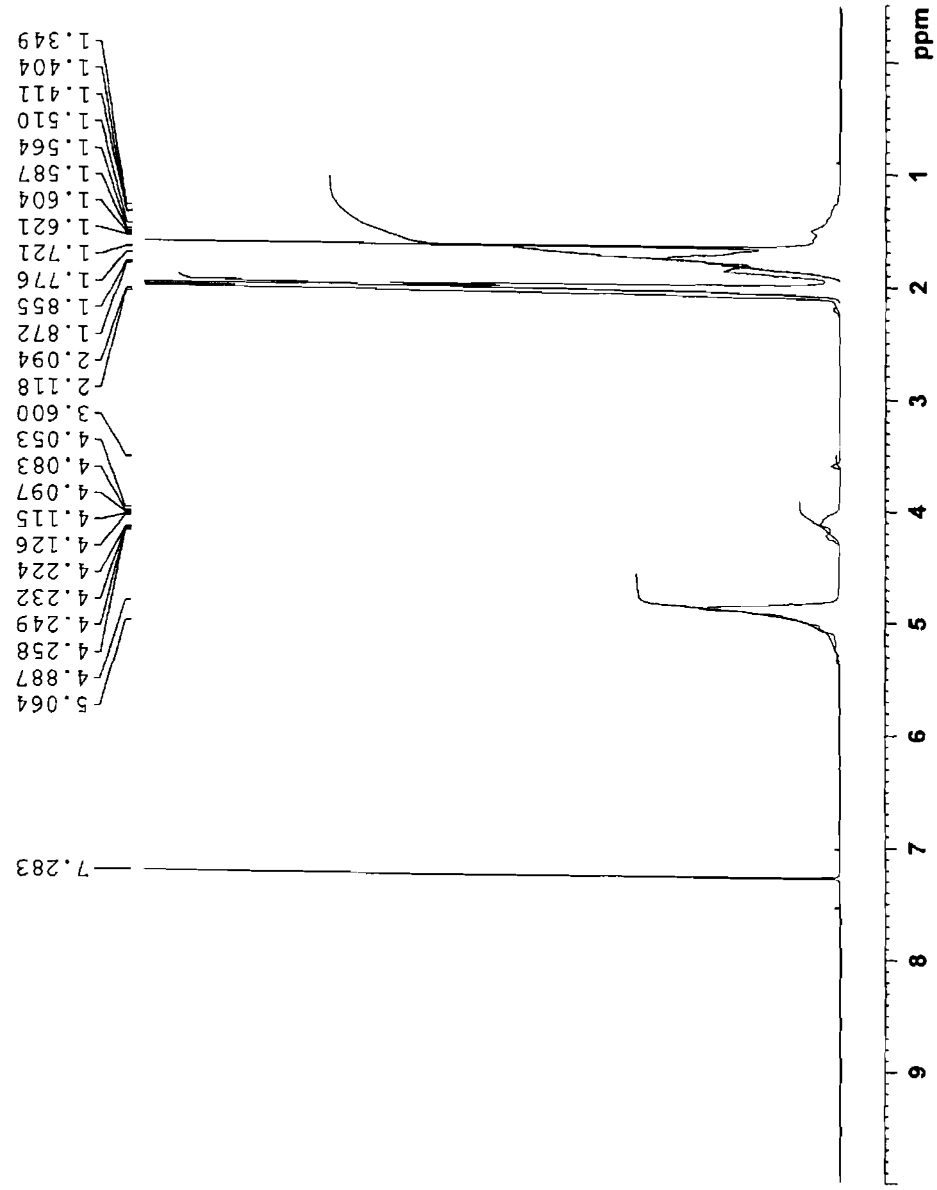
1.349
1.404
1.411
1.510
1.564
1.587
1.604
1.621
1.721
1.776
1.855
1.872
2.094
2.118
3.600
4.053
4.083
4.097
4.115
4.126
4.224
4.232
4.249
4.258
4.887
5.064
7.283
ppm
1
2
3
4
5
6
7
8
9

Fig. 4

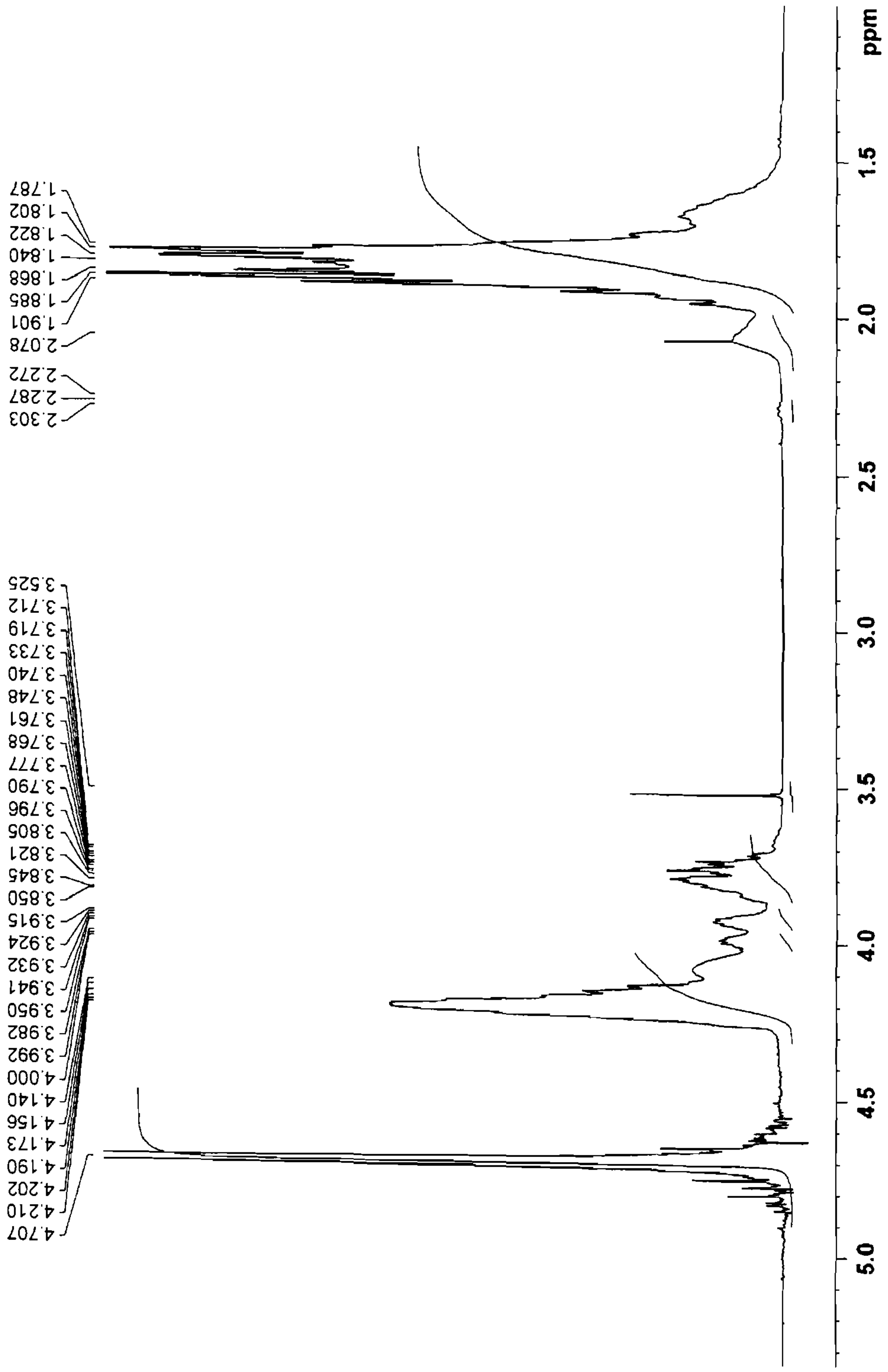
1.787
1.802
1.822
1.840
1.868
1.885
1.901
2.078
2.272
2.287
2.303
3.525
3.712
3.719
3.733
3.740
3.748
3.761
3.768
3.777
3.790
3.796
3.805
3.821
3.845
3.850
3.915
3.924
3.932
3.941
3.950
3.982
3.992
4.000
4.140
4.156
4.173
4.190
4.202
4.210
4.707
ppm
1.5
2.0
2.5
3.0
3.5
4.0
4.5
5.0

Fig. 5

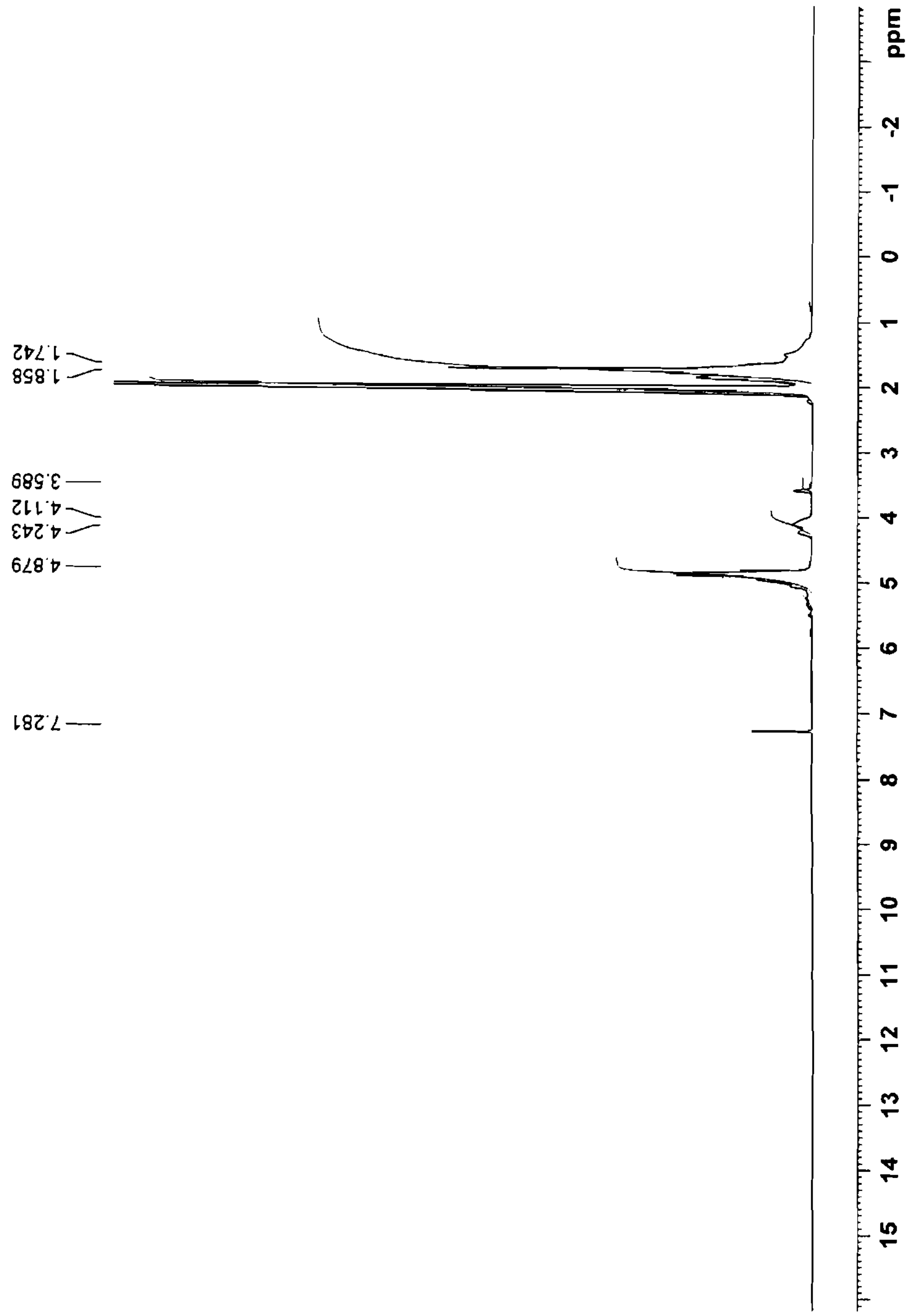

Fig. 6

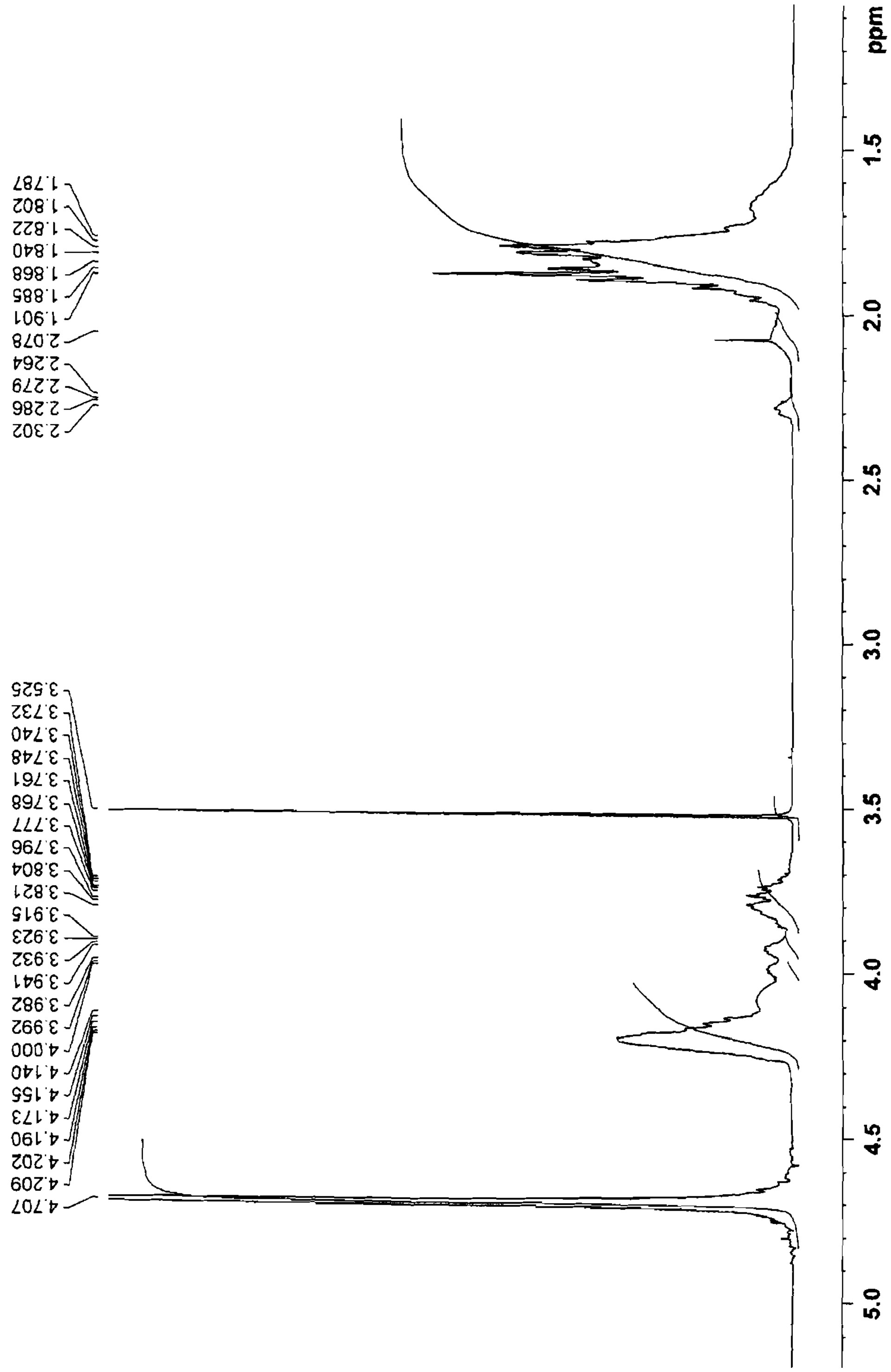
1.787
1.802
1.822
1.840
1.868
1.885
1.901
2.078
2.264
2.279
2.286
2.302
3.525
3.732
3.740
3.748
3.761
3.768
3.777
3.796
3.804
3.821
3.915
3.923
3.932
3.941
3.982
3.992
4.000
4.140
4.155
4.173
4.190
4.202
4.209
4.707
ppm
1.5
2.0
2.5
3.0
3.5
4.0
4.5
5.0

Fig. 7

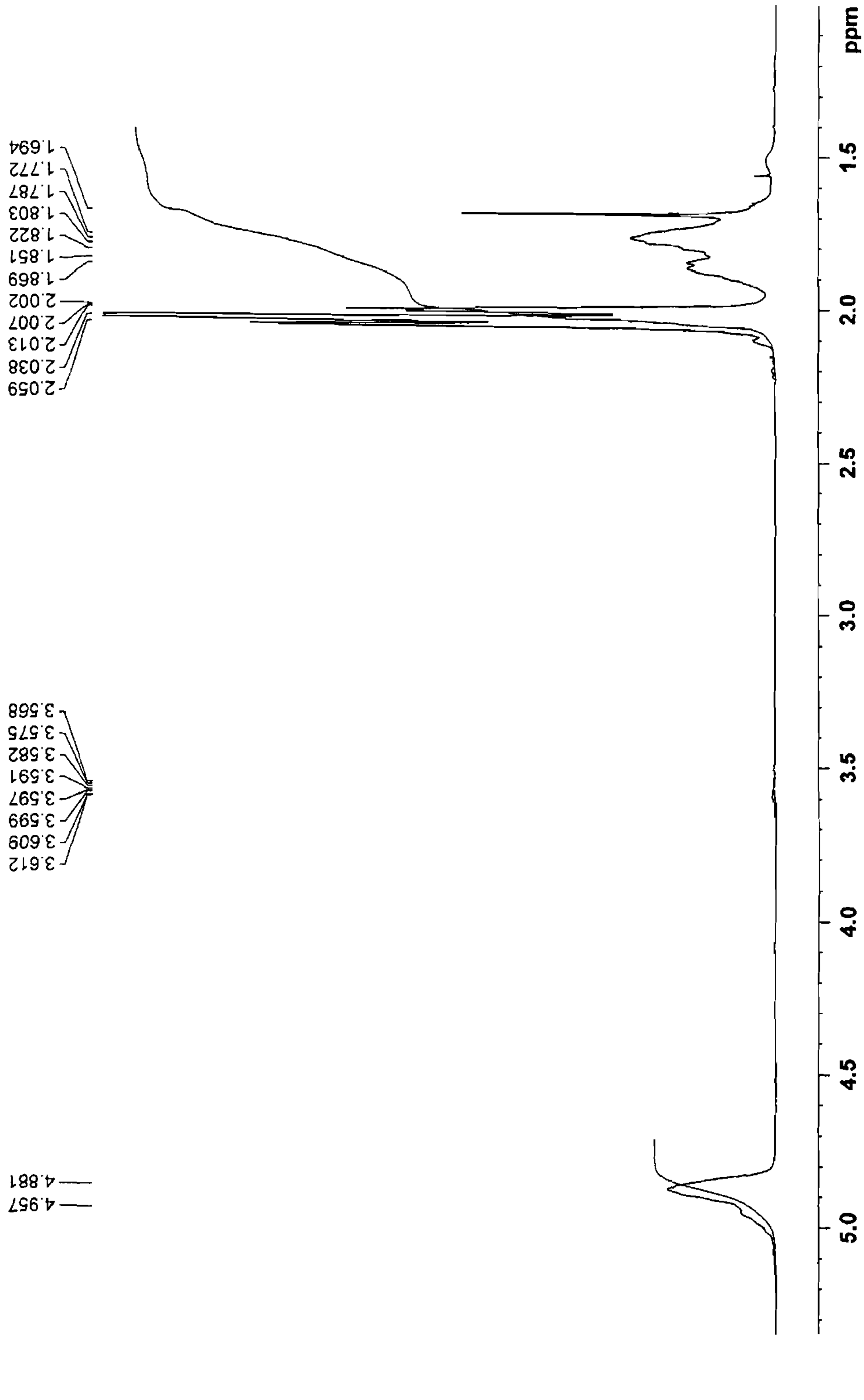
1.694
1.772
1.787
1.803
1.822
1.851
1.869
2.002
2.007
2.013
2.038
2.059
3.568
3.575
3.582
3.591
3.597
3.599
3.609
3.612
4.881
4.957
ppm
1.5
2.0
2.5
3.0
3.5
4.0
4.5
5.0

Fig. 8

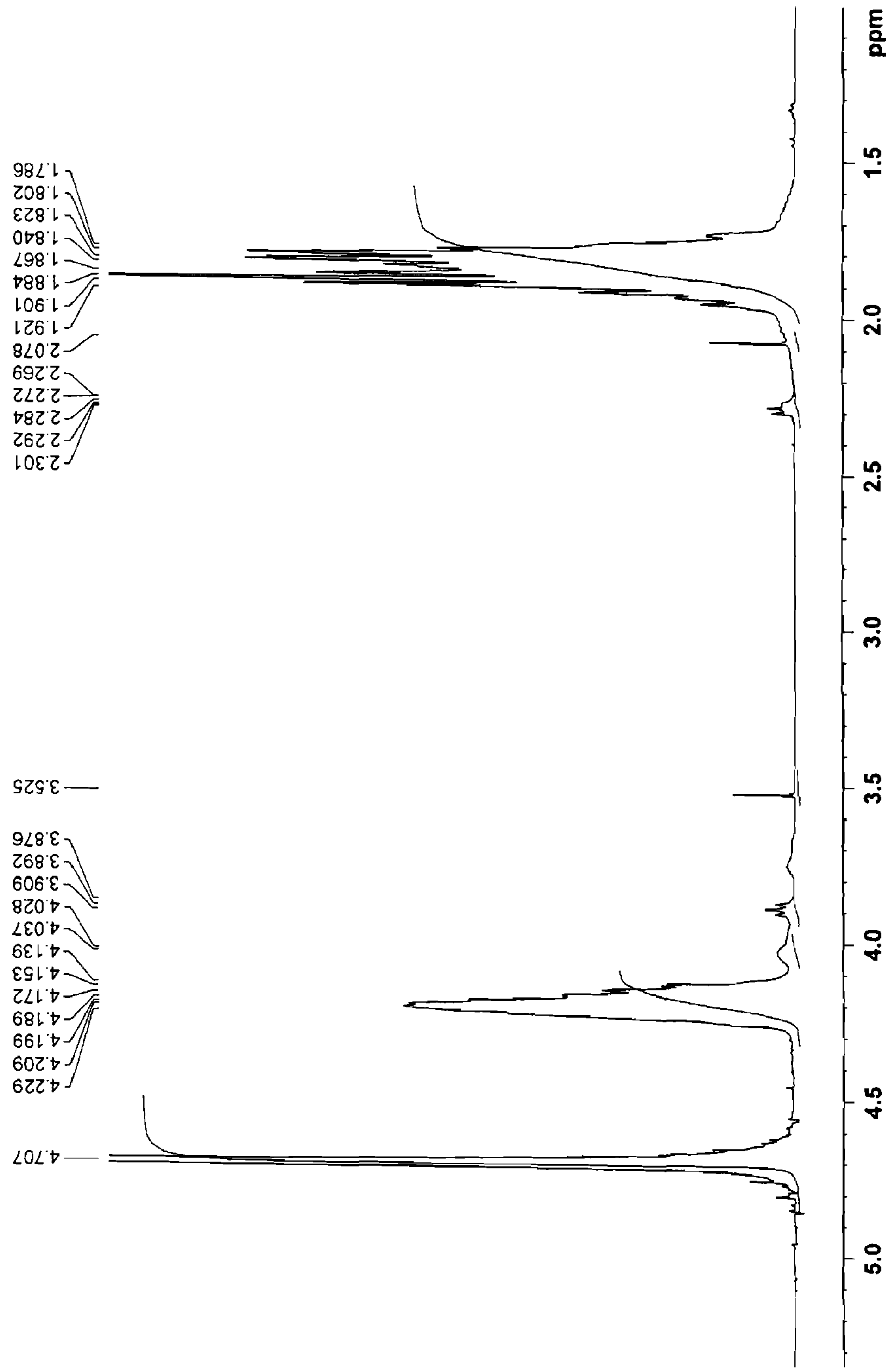
1.786
1.802
1.823
1.840
1.867
1.884
1.901
1.921
2.078
2.269
2.272
2.284
2.292
2.301
3.525
3.876
3.892
3.909
4.028
4.037
4.139
4.153
4.172
4.189
4.199
4.209
4.229
4.707
ppm
1.5
2.0
2.5
3.0
3.5
4.0
4.5
5.0

Fig. 9

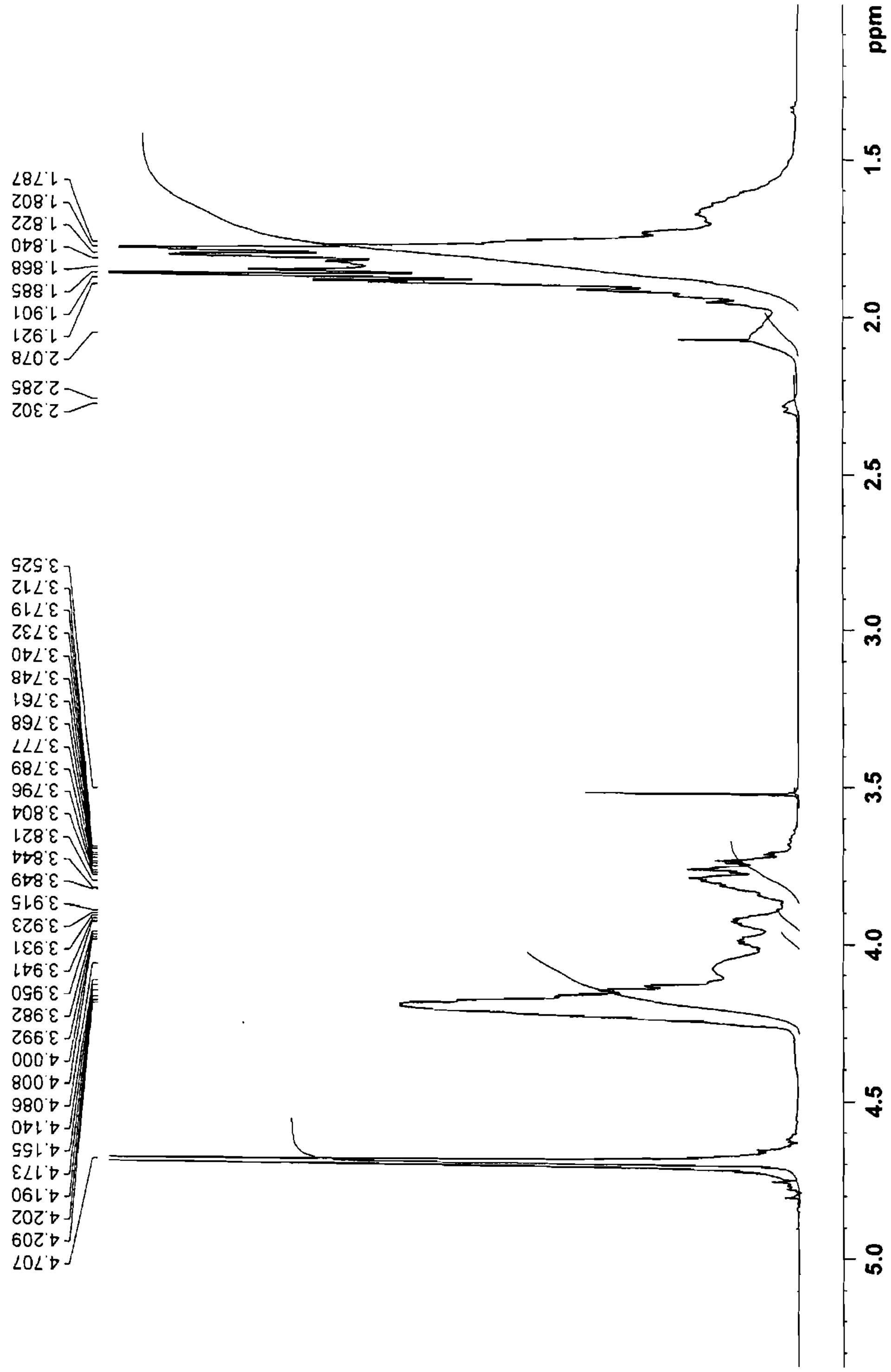
1.787
1.802
1.822
1.840
1.868
1.885
1.901
1.921
2.078
2.285
2.302
3.525
3.712
3.719
3.732
3.740
3.748
3.761
3.768
3.777
3.789
3.796
3.804
3.821
3.844
3.849
3.915
3.923
3.931
3.941
3.950
3.982
3.992
4.000
4.008
4.086
4.140
4.155
4.173
4.190
4.202
4.209
4.707
ppm
1.5
2.0
2.5
3.0
3.5
4.0
4.5
5.0

**INTERNATIONAL SEARCH REPORT**

International application No.
PCT/JP2014/050982

A. CLASSIFICATION OF SUBJECT MATTER
*C08F216/06*(2006.01)i, *C08F8/12*(2006.01)i, *C09J129/04*(2006.01)i

According to International Patent Classification (IPC) or to both national classification and IPC

B. FIELDS SEARCHED

Minimum documentation searched (classification system followed by classification symbols)
C08F216/06, C08F8/12, C09J129/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-43644 A (Kuraray Co., Ltd.), 12 February 2004 (12.02.2004), claims; paragraphs [0001], [0011], [0034], [0041], [0056]; table 2 (Family: none) | 1-5,7-12 |
| Y | JP 2004-91774 A (Kuraray Co., Ltd.), 25 March 2004 (25.03.2004), claims; paragraphs [0021], [0042], [0061]; table 2 & US 2004/0009357 A1 & EP 1380600 A1 & KR 10-2004-0007309 A & CN 1488653 A | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 April, 2014 (08.04.14) | 15 April, 2014 (15.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2014/050982

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-194437 A (Kuraray Co., Ltd.), 21 July 2005 (21.07.2005), claims; paragraphs [0019], [0036], [0053], [0076] to [0079]; table 2 (Family: none) | 1-12 |
| Y | JP 2007-84802 A (The Nippon Synthetic Chemical Industry Co., Ltd.), 05 April 2007 (05.04.2007), claims; paragraphs [0012], [0021] to [0023] & US 2009/0253865 A1 & EP 1930352 A1 & WO 2007/023741 A1 | 1-12 |
| Y | JP 2002-284818 A (The Nippon Synthetic Chemical Industry Co., Ltd.), 03 October 2002 (03.10.2002), claims; paragraphs [0002], [0005], [0006] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S58164604 A
- JP 2008045078 A
- JP S61134290A B
- JP 2006095825 A
- JP S61134290 A